# EUROPEAN PATENT SPECIFICATION

(11) **EP 2 903 150 B1**
(45) Date of publication and mention of the grant of the patent: **26.02.2020**
(21) Application number: 13840888.5
(22) Date of filing: 25.09.2013
(51) Int. Cl.: H02P 6/08, H02P 27/06, H02P 29/00

(54) **POWER CONSUMPTION REDUCTION DEVICE**
VORRICHTUNG ZUR VERRINGERUNG DES ENERGIEVERBRAUCHS
DISPOSITIF DE RÉDUCTION DE CONSOMMATION D'ÉNERGIE

(30) Priority: 28.09.2012 JP 2012217552; 05.04.2013 JP 2013079469
(43) Date of publication of application: 05.08.2015
(73) Proprietor: Daikin Industries, Ltd., Osaka-shi, Osaka 530-8323 (JP)
(72) Inventor: SATO, Toshiaki, Osaka 530-8323 (JP); NAKAYAMA, Norikazu, Osaka 530-8323 (JP); MITSUI, Junya, Osaka 530-8323 (JP); MINEMOTO, Rio, Osaka 530-8323 (JP)
(74) Representative: Global IP Europe Patentanwaltskanzlei
(86) International application number: PCT/JP2013/075831
(87) International publication number: WO 2014/050854

(56) References cited:
- EP-A1- 2 224 587
- WO-A1-2012/105131
- JP-A- H09 140 160
- JP-A- H09 140 160
- JP-A- 2005 263 409
- JP-A- 2010 193 641
- JP-A- 2010 200 468
- JP-A- 2011 130 538
- JP-A- 2011 130 538
- JP-A- 2012 120 409

## Description

### TECHNICAL FIELD

The present invention relates to a power consumption reduction device.

### BACKGROUND ART

Devices in which voltage supplied to a load is detected, and control or the like is performed in conformance with the result of that detection are known in the conventional art. For example, the motor drive device disclosed in patent document 1 (J apanese Laid-open Patent Application No. 2012-120409), detects voltage supplied to an inverter using a voltage detecting circuit, and a drive signal output from the inverter to a motor is controlled based on the detected result. Further, the power supply device disclosed in patent document 2 (J apanese Laid-open Patent Application No. 2005-229792) detects input voltage and output voltage of a boost chopper circuit, and based on the detected result, a switching element changes between on and off to keep voltage output to the load.

WO2012105131 discloses a power consumption reduction device comprising: a power generating part; a voltage detecting part configured and arranged to detect from current flowing therein, a value for voltage supplied from the power generating part; a drive signal generating part configured and arranged to generate a drive signal for driving an actuator based on a detection result of the voltage detecting part; and an electric current supply part configured and arranged to supply current to the voltage detecting part.

### SUMMARY OF THE INVENTION

### <Technical Problem>

In the above mentioned devices, there are devices in which a voltage detection part for detecting voltage supplied to the load are always carried current and consumes power even when voltage detection is not necessary. For example, in patent document 1, it is envisaged that current flows in a voltage detection circuit and the voltage detection circuit consumes power, even when the motor is not driving. Also, in patent document 2 it is envisaged that current flows in a voltage detection circuit for detecting input voltage and output voltage and the voltage detection circuit consumes power, even when it is not necessary for the switching element to switch. Devices like these engender concern of increased, unnecessary power consumption.

A purpose of the present invention is to provide a device capable of reducing power consumption.

### <Solution to Problem>

The present invention is defined in the independent claims.

A power consumption reduction device according to a first aspect of the present invention is provided with a power generating part, a voltage detecting part, a drive signal generating part, an electric current supply part, and a switching part. The voltage detecting part is configured and arranged to detect from current flowing therein, a value for voltage supplied from the power generating part. The drive signal generating part generates a drive signal for driving an actuator based on a detection result of the voltage detecting part. The electric current supply part supplies electric current to the voltage detecting part. The switching part switches flow of current such that, during a drive mode in which the actuator drives, current flows in the voltage detecting part, while during a drive stop mode in which the actuator stops driving, current does not flow in the voltage detecting part.

According to this power consumption reduction device, during the drive stop mode in which the actuator stops driving, the switching part operates such that current does not flow in the voltage detecting part. Accordingly, it is possible to prevent consumption of power in the voltage detecting part due to flow of current therein, notwithstanding that detecting the value for voltage supplied from the power generating part is not necessary, as the actuator has stopped driving.

A power consumption reduction device according to a second aspect of the present invention is provided with a power generating part, a voltage detecting part, a detection result using part, an electric current supply part, and a switching part. The voltage detecting part is configured and arranged to detect from current flowing therein, a value for voltage supplied from the power generating part. The detection result using part uses a detection result of the voltage detecting part. The electric current supply part supplies the electric current to the voltage detecting part. The switching part switches flow of current such that current flows in the voltage detecting part when a detection result is necessary for the detection result using part, and current does not flow in the voltage detecting part when a detection result is not necessary for the detection result using part.

According to this power consumption reduction device, due to the operation of the switching part, current does not flow in the voltage detecting part when a detection result of the voltage detecting part is not required for the detection result using part. Thus, it is possible to prevent consumption of power in the voltage detecting part due to flow of current therein, notwithstanding that detecting the value for voltage supplied from the power generating part is not necessary as a detection result of the voltage detecting part is not required for the detection result using part.

A power consumption reduction device according to a third aspect of the present invention is the power consumption reduction device according to the first aspect, in which the switching part cuts the flow of the current to the voltage detecting part when a predetermined time has elapsed from when the actuator stopped driving.

Thus, in the case in which it is certainly suitable to stop function of the voltage detecting part, the flow of the current to the voltage detecting part is cut, and the operation of detecting a voltage value by the voltage detecting part stops.

A power consumption reduction device according to a fourth aspect of the present invention is the power consumption reduction device according to either of the first aspect or the third aspect, in which the switching part flows the current to the voltage detecting part when the actuator which has stopped driving, commences driving.

Thus, when the actuator drives, the voltage detecting part comes to detect a voltage value. Accordingly, when the actuator drives, the actuator can be driven through a drive signal based on a detection result of the voltage detecting part, without being affected by the switching part provided.

A power consumption reduction device according to a fifth aspect of the present invention is the power consumption reduction device according to the second aspect, in which the switching part cuts the flow of the current to the voltage detecting part when a predetermined time has elapsed from when the detection result using part stops using a detection result of the voltage detecting part.

Thus, in the case in which it is certainly suitable to stop function of the voltage detecting part, flow of current to the voltage detecting part is cut, and the operation of detecting a voltage value by the voltage detecting part is stopped.

A power consumption reduction device according to a sixth aspect of the present invention is the power consumption reduction device according to either of the second aspect or the fifth aspect, in which the switching part flows current to the voltage detecting part when the detection result using part having stopped using a detection result of the voltage detecting part, commences using a detection result of the voltage detecting part.

Thus, when the detection result using part uses a detection result of the voltage detecting part, detection of the voltage value by the voltage detecting part is performed. Accordingly, the detection result using part is able to use a detection result of the voltage detecting part, without being affected by the switching part provided.

A power consumption reduction device according to a seventh aspect of the present invention is the power consumption reduction device according to any of the first, third and fourth aspects, in which the actuator is a motor that is a drive source of at least one of a plurality of devices included in an air conditioner. The drive signal generating part includes a determining part and an output part. The determining part performs control determining a drive signal using a detection result of the voltage detecting part. The output part generates a drive signal as determined by the determining part and outputs the drive signal to the actuator. The switching part is subject to switching control from a centralized control unit performing overall control of the plurality of devices included in the air conditioner, separate to the determining part of the drive signal generating part.

Thus, during drive stop mode, even in the case in which the determining part, together with the actuator, is in the function stopped state, the switching part is subject to switching control from the centralized control unit that exists separate to the determining part. Accordingly, the switching part switches with certainty.

A power consumption reduction device according to an eighth aspect of the present invention is the power consumption reduction device according to the seventh aspect, in which the switching part has a switch and a drive power supply part. The switch is connected in series to the voltage detecting part. The drive power supply part supplies switch drive power to the switch. The drive power supply part also supplies to at least one of the determining part and the output part, function part drive power for driving at least one of the determining part and the output part. The drive power supply part, by either supplying or cutting supply of function part drive power, switches flow of current to at least one of the determining part and the output part, in addition to switching flow of current to the voltage detecting part.

Here, the drive power supply part is used not only as the power source for switching, but is also used as the power source for at least one of the determining part and the output part. Further, the drive power supply part performs the operation of supplying or not supplying function part drive power to at least one of the determining part and the output part. Thus, the drive power supply part is not only able to switch the flow of the current to the voltage detecting part, but can switch the flow of the current to at least one of the determining part and the output part.

A power consumption reduction device according to a ninth aspect of the present invention is the power consumption reduction device according to either of the seventh aspect or the eighth aspect, in which the switching part cuts the flow of the current to the voltage detecting part when a predetermined time has elapsed from when the air conditioner stops operating.

Thus, after the air conditioner stops operating, when it is certainly suitable to stop function of the voltage detecting part, usage of the detection result of the voltage detecting part having become unnecessary, flow of current to the voltage detecting part is cut, and the detection operation of the voltage detecting part stops.

A power consumption reduction device according to a tenth aspect of the present invention is the power consumption reduction device according to any of the first aspect, the third aspect, the fourth aspect and the seventh through ninth aspects, in which the actuator is an indoor fan motor that is a drive source for an indoor fan included in the air conditioner.

Thus, in the air conditioner, it is possible to prevent consumption of power in the voltage detecting part, notwithstanding that as the indoor fan motor has stopped driving, detecting the value for voltage supplied from the power generating part is not necessary.

A power consumption reduction device according to an eleventh aspect of the present invention is the power consumption reduction device according to any of the first aspect through the seventh aspect, the ninth aspect and the tenth aspect, in which the voltage detecting part is connected in parallel to the power generating part. The switching part has a switch connected to the voltage detecting part in series.

Thus, it is possible to restrain cost because the switching part is of a simple configuration.

A power consumption reduction device according to a twelfth aspect of the present invention is the power consumption reduction device according to the eleventh aspect, in which the switching part further has a drive power supply part. The drive power supply part supplies switch drive power to the switch. The switching part switches the flow of the current to the voltage detecting part by either supplying or cutting the switch drive power to the switch.

Thus, by either supplying or not supplying the switch drive power to the switch, the flow of the current to the voltage detecting part can easily be switched.

### <Advantageous Effects of Invention>

According to the power consumption reduction device of the first aspect, it is possible to prevent consumption of power in the voltage detecting part due to the flow of the current therein, notwithstanding that detecting a value for voltage is not necessary as the actuator (that is, the indoor fan motor) has stopped driving.

According to the power consumption reduction device of the second aspect, it is possible to prevent consumption of power in the voltage detecting part due to the flow of the current therein, notwithstanding that detecting the value for voltage supplied from the power generating part is not necessary as the detection result of the voltage detecting part is not required for the detection result using part.

According to the power consumption reduction device of the third aspect, in the case in which it is certainly suitable to stop function of the voltage detecting part, the flow of the current to the voltage detecting part is cut, and the operation of detecting the voltage value by the voltage detecting part stops.

According to the power consumption reduction device of the fourth aspect, when the actuator is driving, the actuator can be driven through the drive signal based on the detection result of the voltage detecting part, without being affected by the switching part provided.

According to the power consumption reduction device of the fifth aspect, in the case in which it is certainly suitable to stop function of the voltage detecting part, the flow of the current to the voltage detecting part is cut, and the operation of detecting the voltage value by the voltage detecting part stops.

According to the power consumption reduction device of the sixth aspect, when the detection result using part uses the detection result of the voltage detecting part, detection of the voltage value by the voltage detecting part is performed. Accordingly, the detection result using part is able to use the detection result of the voltage detecting part, without being affected by the switching part provided.

According to the power consumption reduction device of the seventh aspect, the switching part switches with certainty.

According to the power consumption reduction device of the eighth aspect, the drive power supply part is used not only as the power source for switching, but is also used as the power source for at least one of the determining part or the output part. Further, the drive power supply part is not only able to switch the flow of the current to the voltage detecting part, but can switch the flow of the current to at least one of the determining part and the output part.

According to the power consumption reduction device of the ninth aspect, in the case in which it is certainly suitable to stop function of the voltage detecting part, the flow of the current to the voltage detecting part is cut, and the detection operation of the voltage detecting part stops.

According to the power consumption reduction device of the tenth aspect, in the air conditioner, it is possible to prevent consumption of power in the voltage detecting part, notwithstanding that as the indoor fan motor has stopped driving, detecting the value for voltage supplied from the power generating part is not necessary.

The power consumption reduction device according to the eleventh aspect, it is possible to restrain cost.

According to the power consumption reduction device of the twelfth aspect, the flow of the current to the voltage detecting part can easily be switched by either supplying or not supplying the switch drive power to the switch.

### BRIEF DESCRIPTION OF THE DRAWINGS

FIG. 1 is a block diagram showing the internal configuration of the actuator drive device according to a first embodiment of the present invention and the internal configuration of the indoor fan motor driven by the actuator drive device,;
FIG. 2 is a simplified view of the configuration of the air conditioner;
FIG. 3 is an expanded view of the vicinity of the smoothing capacitor, the voltage detecting part and the current detecting part;
FIG. 4 is a block diagram showing, in simplified view, the configuration of the sensorless control part;
FIG. 5 is a timing chart showing how each mode associated with the actuator drive device, power voltage supplied to the fan control microcomputer, the operation of the indoor fan motor, the operation of the power consumption reduction switch and the operation of the voltage detecting part change in response to an operation stop instruction and an operation commence instruction;
FIG. 6 is a block diagram showing the internal configuration of the actuator drive device according to modification 1A, and the internal configuration of the indoor fan motor driven by the actuator drive device;
FIG. 7 is a block diagram showing the internal configuration of the actuator drive device according to modification 1B, and the internal configuration of the indoor fan motor driven by the actuator drive device;
FIG. 8 is a block diagram showing the internal configuration of the power supply device according to a second embodiment of the present invention;
FIG. 9 is a timing chart showing how the state of implementation of control of the switching element control part, the state of the first switch and of the second switch, the operating state of the input voltage detecting part, and the operating state of the output voltage detecting part and the like, change as time elapses;
FIG. 10 is a block diagram showing the internal configuration of the power supply voltage abnormality detection device according to a third embodiment of the present invention;
FIG. 11 is a timing chart showing the changes in the state of implementation of operation of the judging part, the state of the switch and the operating state of the voltage detecting part.

### DESCRIPTION OF EMBODIMENTS

### <First embodiment

An actuator drive device 30 according to a first embodiment of the present invention will now be described with reference to the drawings, it being understood that the embodiment described following is a basic example that is illustrative and not intended to restrict the technical scope of the invention.

### (1) Configuration of the air conditioner and outline

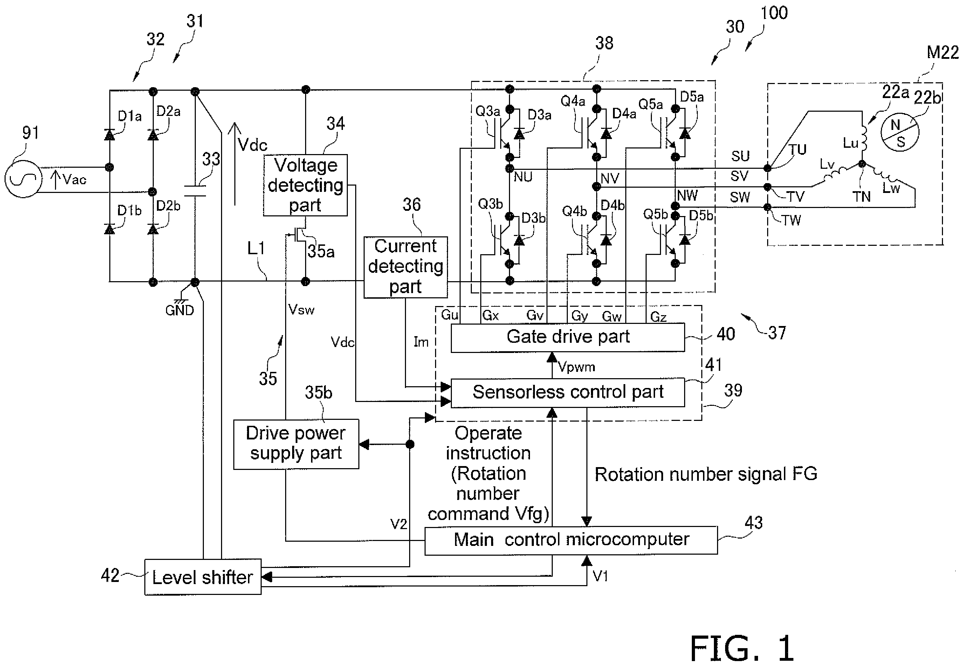

FIG. 1 shows the overall configuration of an actuator drive system 100 including an indoor fan motor M22 as an actuator, and an actuator drive device 30 according to this embodiment, for controlling drive of the indoor fan motor M22.

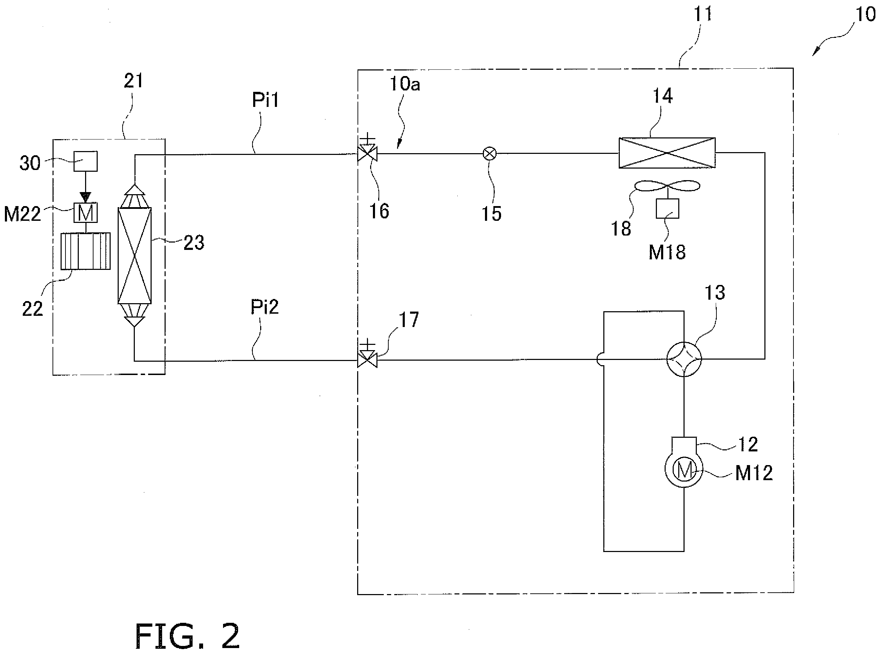

The indoor fan motor M22 is a fan motor used as a drive source for an indoor fan 22 that is one of the devices included in an indoor unit 21 (refer FIG. 2) of an air conditioner 10, being an AC motor driven by application of AC voltage. The actuator drive device 30, mounted inside the indoor unit 21, is a device that performs vector control (that is, Field Oriented Control of the AC motor) of the indoor fan motor M22 based on a motor current Im that is current flowed to the indoor fan motor M22.

The configuration of the air conditioner 10 will now be described with reference to FIG. 2. The air conditioner 10 is a separator type air conditioner, having primarily, an outdoor unit 11 provided outdoors, and an indoor unit 21 installed to the ceiling or a wall or the like inside the room. The outdoor unit 11 and the indoor unit 21 are connected via refrigerant pipes Pi1 and Pi2, forming a steam compression type refrigerant circuit 10a. This air conditioner 10 is able to perform a cooling operation, a heating operation and the like.

### (1-1) Outdoor unit

The outdoor unit 11 has primarily, a compressor 12, a four-way switching valve 13, an outdoor heat exchanger 14, an expansion valve 15, a liquid-side shut off valve 16, a gas-side shut off valve 17, and an outdoor fan 18.

The compressor 12 is a mechanism that sucks in low-pressure gas refrigerant, and compresses this refrigerant to become high-pressure gas refrigerant, which is then discharged. Here, the compressor 12 is a hermetically sealed compressor, in which positive displacement compressor element (not shown in the drawing) such as rotary or scroll type or the like, accommodated in a casing (not shown in the drawing), is driven by a compressor motor M12 accommodated in the same casing. Thus, the capacity of the compressor 12 is able to be controlled. That is, the compressor 12 is a variable capacity type compressor. The compressor motor M12 is a three-phase, brushless DC motor, having a stator and rotor or the like.

The four-way switching valve 13 is a valve for switching the direction of flow of the refrigerant when switching between the cooling operation and the heating operation. The four-way switching valve 13, during the cooling operation, connects the discharge-side of the compressor 12 and the gas-side of an outdoor heat exchanger 14, and connects the gas-side shut off valve 17 and the intake side of the compressor 12 (refer to the solid line of the four-way switching valve 13 in FIG. 2). Further, the four-way switching valve 13, during the heating operation, connects the discharge-side of the compressor 12 and the gas-side shut off valve 17, and connects the gas-side of the outdoor heat exchanger 14 and the intake side of the compressor 12 (refer the broken line of the four-way switching valve 13 in FIG. 2). That is, the state of connectivity taken by the four-way switching valve 13 changes in conformance with the type of operation performed by the air conditioner 10.

The outdoor heat exchanger 14 is a heat exchanger that functions as a condenser of refrigerant during the cooling operation and functions as an evaporator of refrigerant during the heating operation. For example, the outdoor heat exchanger 14 comprises a plurality of fins and a plurality of heat transmission tubes inserted into these fins, and performs heat exchange between outside air supplied from an outdoor fan 18 and the refrigerant flowing inside the heat transmission tubes. The liquid-side of the outdoor heat exchanger 14 is connected to the expansion valve 15, and the gas-side of the outdoor heat exchanger 14 is connected to the four-way switching valve 13.

The expansion valve 15 comprises an electric valve. The expansion valve 15, during the cooling operation, depressurizes the high pressure liquid refrigerant condensed at the outdoor heat exchanger 14 before this refrigerant is delivered to the indoor heat exchanger 23 (as described subsequently). Further, the expansion valve 15, during the heating operation, depressurizes the high-pressure liquid refrigerant condensed at the indoor heat exchanger 23, before this refrigerant is delivered to the outdoor heat exchanger 14.

The liquid-side shut off valve 16 and the gas-side shut off valve 17 are valves provided at the connection ports of the external devices and the pipes Pi1 and Pi2. Inside the outdoor unit 11, the liquid-side shut off valve 16 is connected to the expansion valve 15. The gas-side shut off valve 17 is connected to the four-way switching valve 13.

The outdoor fan 18, after sucking external air into the outdoor unit 11 and supplying this to the outdoor heat exchanger 14, expels this air outside of the outdoor unit 11. A propeller fan for example, is employed as the outdoor fan 18, the rotations of which are driven by an outdoor fan motor M18 as the drive source. The outdoor fan motor M18 is a three-phase brushless motor having a stator and a rotor.

Additionally, the outdoor unit 11 has various sensors such as a refrigerant pressure sensor, a refrigerant temperature sensor and an external air temperature sensor and the like. The outdoor unit 11 has an external control part (not shown in the drawing) for controlling the various kinds of devices located therein.

### (1-2) Indoor unit

The indoor unit 21 has primarily an indoor fan 22 and an indoor heat exchanger 23, these being disposed inside the casing of the indoor unit 21.

The indoor fan 22 is a centrifugal fan, that sucks external air into the casing via a suction port (not shown in the drawing), and expels the air that has been subjected to heat exchange at the indoor heat exchanger 23 from inside the casing out to within the room via a discharge port (not shown in the drawing). The indoor fan 22 has for example a Sirocco fan configuration, the rotations thereof being driven by the indoor fan motor M22 as the power source. The indoor fan motor M22 is subjected to drive control from the actuator drive device 30.

The indoor fan motor M22 will now be described in detail with reference to FIG. 1. The indoor fan motor M22, in the same manner as the other motors, M12, M18, is a three-phase, brushless DC motor, having a stator 22a and a rotor 22b.

The stator 22a includes drive coils Lu, Lv and Lw of star connected U-phase, V-phase and W-phase. One end of each of the drive coils Lu, Lv and Lw is connected, respectively, to the drive coil terminals TU, TV and TW of each of the wires of the U-phase, V-phase and W-phase extending from an inverter 38 (described subsequently). The other end of each of the drive coils Lu, Lv and Lw are mutually connected at the terminal TN. By the rotations of the rotor 22b, these three-phase drive coils Lu, Lv and Lw generate an induced voltage corresponding to the rotation number and the position of the rotor 22b.

The rotor 22b includes a permanent magnet having a plurality of poles comprising an N pole and an S pole, and rotates around a rotation axis in relation to the stator 22a, the rotation torque of the rotor 22b being conveyed to the indoor fan 22 via an output shaft (not shown in the drawing) on the same axis as this rotation axis.

Focusing on the configuration of the rotor, in broad terms motor types can be divided into surface permanent magnet motors, (hereinafter "SPM motor") and interior permanent magnet motors (hereinafter "IPM motor"). The brushless DC motor used as the indoor fan motor M22 in the explanation following, envisages the case of using an ordinary SPM motor.

The indoor heat exchanger 23 is a heat exchanger that functions as an evaporator of refrigerant during the cooling operation, and functions as a condenser of refrigerant during the heating operation. The indoor heat exchanger 23 is connected to each of the refrigerant pipes Pi1 and Pi2, and comprises for example, a plurality of fins and a plurality of heat transmission tubes inserted into these fins. The indoor heat exchanger 23 exchanges heat between air from inside the room sucked into the casing and the refrigerant flowing in the heat transmission tubes.

Additionally, although not shown in the drawings, the indoor unit 21 has a horizontal flap provided to the discharge port, a variety of sensors such as an air intake temperature sensor, an indoor control part for controlling the various devices inside the indoor unit 21, and the like.

### (2) Configuration of the actuator drive device

As shown in FIG. 1, the actuator drive device 30 according to this embodiment, is provided with a DC voltage generator 31 (corresponding to a power generating part and an electric current supply part), a voltage detecting part 34, a switching unit 35, a current detecting part 36, a drive voltage generator 37 (corresponding to a drive signal generator), a level shifter 42, and a main control microcomputer 43 (corresponding to a centralized control unit).

These functional parts comprising the actuator drive device 30 are for example, mounted on a single printed substrate.

### (2-1) DC voltage generator

The DC voltage generator 31 operates to convert AC voltage Vac input from a commercial power supply 91 to DC voltage Vdc. The DC voltage generator 31 has primarily a rectifier unit 32 and a smoothing capacitor 33.

Although not shown in the drawings, the DC voltage generator 31 and the commercial power supply 91 are connected via for example, a power cord and power outlet inside the house.

### (2-1-1) Rectifier unit

The rectifier unit 32 has a bridge form configuration in four diodes, D1a, D1b, D2a, and D2b. Specifically, the diodes D1a and D1b are mutually connected in series, and the diodes D2a and D2b are mutually connected in series. Each of the cathode terminals of the diodes D1a and D2a are connected together at the positive-side terminal of the smoothing capacitor 33, and function as the positive-side output terminal of the rectifier unit 32. Each of the anode terminals of the diodes D1b and D2b are connected to the minus-side terminal of the smoothing capacitor 33, and function as the negative-side output terminal of the rectifier unit 32. The connecting point of the diodes D1a and D1b and the connecting point of the diodes D2a and D2b are connected, respectively, to the commercial power supply 91. That is, the connecting point of the diodes D1a and D1b and the connecting point of the diodes D2a and D2b operate respectively as inputs of the rectifier unit 32.

The rectifier unit 32 configured in this way, rectifies the AC voltage Vac input from the commercial power supply 91, and supplies this to the smoothing capacitor 33.

### (2-1-2) Smoothing capacitor

One end of the smoothing capacitor 33 is connected to the positive-side output terminal of the rectifier unit 32, and the other end is connected to the negative-side output terminal of the rectifier unit 32. The smoothing capacitor 33 smooths the voltage rectified by the rectifier unit 32. The smoothed voltage is low-ripple DC voltage Vdc, and is supplied to the inverter 38 connected to the subsequent stage side (that is the output side) of the smoothing capacitor 33. The terminal of the other side of this capacitor becomes the reference potential (hereinafter abbreviated as "GND") of the switching unit 35 and the like, described subsequently.

Note that there are various types of capacitor, such as electrolytic capacitors, ceramic capacitors and tantalum capacitors and the like, but in this embodiment, an example in which an electrolytic capacitor is employed as the smoothing capacitor 33.

### (2-2) Voltage detecting part

The voltage detecting part 34 is connected in parallel to the smoothing capacitor 33 at the output side of the smoothing capacitor 33. The voltage detecting part 34 detects the voltage of both terminals of the smoothing capacitor 33: the value of DC voltage Vdc that is the voltage supplied from the DC voltage generator 31.

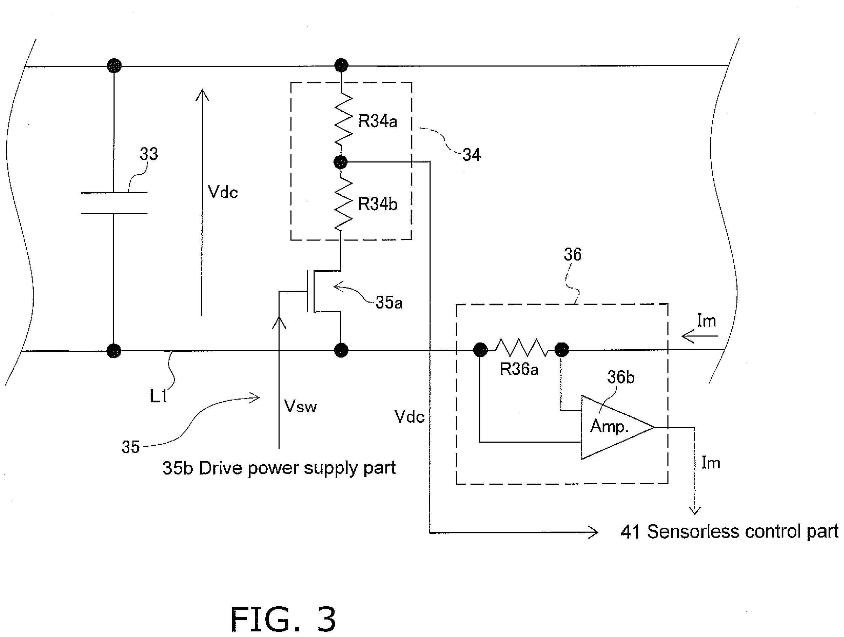

In particular, as shown in FIG. 3, the voltage detecting part 34 of this embodiment, has a configuration for example in which the two resistors R34a and R34b mutually connected in series, are connected in parallel to the smoothing capacitor 33, dividing DC voltage Vdc. The voltage value of the connection point of the two resistors R34a and R34b as a value obtained by multiplying the DC voltage Vdc by a predetermined division ratio, is input to a sensorless control part 41 (described subsequently) of the drive voltage generator 37. Note that this predetermined division ratio is determined from a value of each of the resistors R34a and R34b that are mutually, directly connected.

With the voltage detecting part 34 of this configuration, it is possible to detect a value for DC voltage Vdc by the current associated with the DC voltage Vdc flows inside the voltage detecting part 34 (specifically, the resistors R34a and R34b). Thus, the DC voltage generator 31 according to this embodiment, may also be called a "current supplying part" for supplying current to the voltage detecting part 34.

### (2-3) Switching unit

The switching unit 35 is for switching the flow of current to the voltage detecting part 34. As shown in FIG. 1 and FIG. 3, the switching unit 35 has a power consumption reduction switch 35a and a drive power supply part 35b.

### (2-3-1) Power consumption reduction switch

The power consumption reduction switch 35a is connected in series to the voltage detecting part 34, and together with the voltage detecting part 34, connected in parallel to the smoothing capacitor 33. The power consumption reduction switch 35a is for example configured with MOSFET (a Metal-Oxide Semiconductor Field-Effect Transistor), a kind of semiconductor switch, and performs the role of a switch that switches current to flow or not to flow in the voltage detecting part 34. That is, MOSFET is turned on by the electric potential of the gate terminal being higher than a threshold value relative to the electric potential of the source terminal. Accordingly, by supplying the appropriate voltage to the gate terminal, the power consumption reduction switch 35a comprised of a MOSFET is able to operate as a switch switching between on and off.

Specifically, the power consumption reduction switch 35a is on during drive mode in which the indoor fan motor M22 drives. As due to this, current flows inside the voltage detecting part 34, the power consumption reduction switch 35a is able to cause the voltage detecting part 34 to perform an operation to detect a value for DC voltage Vdc. Further, during the drive stop mode in which the indoor fan motor M22 is not driving, the power consumption reduction switch 35a is off. As, due to this, current comes to stop flowing inside the voltage detecting part 34, the power consumption reduction switch 35a is able to cause the voltage detecting part 34 to stop operating to detect a value for DC voltage Vdc.

Thus, the power consumption reduction switch 35a is in the on state or the off state depending on whether the indoor fan motor M22 is in the drive mode or in the drive stop mode. As, due to this, continual flow of current to the voltage detecting part 34 can be prevented, the power consumption reduction switch 35a can be an electrical component for preventing unnecessary consumption of power in the voltage detecting part 34 that is configured such that current flows therein if DC voltage Vdc is supplied.

### (2-3-2) Drive power supply part

The drive power supply part 35b is comprised of a plurality of transistors and the like. The input of the drive power supply part 35b is connected to the main control microcomputer 43 and the level shifter 42. The output of the drive power supply part 35b is connected to the gate terminal of the power consumption reduction switch 35a. The drive power supply part 35b is supplied with predetermined voltage V2 described subsequently from the level shifter 42. The drive power supply part 35b, in response to an instruction from the main control microcomputer 43, generates switch drive power Vsw of the power consumption reduction switch 35a, and outputs this to the power consumption reduction switch 35a. Accordingly, the operation of turning the power consumption reduction switch 35a on and off can be said to be controlled by the main control microcomputer 43.

Specifically, the drive power supply part 35b, by supplying to the power consumption reduction switch 35a, switch drive power Vsw of for example 5V, turns the power consumption reduction switch 35a on, such that current flows in the voltage detecting part 34. The drive power supply part 35b, by cutting supply to the power consumption reduction switch 35a of switch drive power Vsw, turns the power consumption reduction switch 35a off, such that current does not flow in the voltage detecting part 34.

Note that the specifics of the timing at which the power consumption reduction switch 35a switches from on to off or from off to on is described below in (3) Operation of the power consumption reduction switch and the indoor fan motor.

### (2-4) Current detecting part

As shown in FIG. 1, the current detecting part 36 is between the smoothing capacitor 33 and the inverter 38 in the drive voltage generator 37, and is connected to the negative-side output terminal of the smoothing capacitor 33. After the indoor fan motor M22 starts, the current detecting part 36 detects the motor current Im flowing to the indoor fan motor M22.

As shown in FIG. 3, this kind of current detecting part 36 is comprised from for example, a shunt resistor R36a and an amplifying circuit 36b. The shunt resistor R36a is connected in series on the GND line L1 that is connected to the negative-side output terminal of the smoothing capacitor 33. The amplifying circuit 36b is a circuit comprised from an operational amplifier and the like, for amplifying voltage of both terminals of the shunt resistor R36a at a predetermined magnification. In the amplifying circuit 36b, each of two inputs connects to the respective terminals of the shunt resistor R36a, and a single output connects to the sensorless control part 41. Current flowing in the indoor fan motor M22 (that is motor current Im) flows along the GND line L1, thus the current detecting part 36, is able to detect the motor current Im by detecting the voltage of both terminals of the shunt resistor R36a associated with the motor current Im, in response to the state of electrification.

### (2-5) Drive voltage generator

The drive voltage generator 37 generates drive voltages SU, SV and SW (corresponding to drive signals), being AC voltage for driving the indoor fan motor M22, based on each of the detection result Vdc and Im and the like of the voltage detecting part 34 and the current detecting part 36. The drive voltage generator 37 according to this embodiment, particularly uses the DC voltage Vdc results and the like that are the results detected by the voltage detecting part 34, generating drive voltages SU, SV and SW based on a sensorless rotor position detection system. The drive voltage generator 37 outputs the generated drive voltages SU, SV and SW to the indoor fan motor M22.

As shown in FIG. 1, the drive voltage generator 37 is comprised of the inverter 38 (corresponding to an output part) and a fan control microcomputer 39 (corresponding to a determining part).

### (2-5-1) Inverter

The inverter 38 is connected to the output-side of the smoothing capacitor 33. As shown in FIG. 1, the inverter 38 includes a plurality of insulated gate bipolar transistors (hereinafter, simply "transistors"), Q3a, Q3b, Q4a, Q4b, Q5a and Q5b, and a plurality of reflux diodes D3a, D3b, D4a, D4b, D5a and D5b. The transistors Q3a and Q3b, Q4a and Q4b, Q5a and Q5b are respectively, mutually connected in series. Each of the diodes D3a through D5b are connected in reverse parallel to each of the transistors Q3a through Q5b, by which the collector terminals of the transistors and the cathode terminals of the diodes are connected, and the emitter terminals of the transistors and the anode terminals of the diodes are connected.

DC voltage Vdc from the smoothing capacitor 33 is supplied to the inverter 38. The inverter 38 generates the drive voltages SU, SV and SW (corresponding to drive signals) having the desired duty by causing each of the transistors Q3a through Q5a to be on or off, according to the timing as instructed from a gate drive part 40 (as described subsequently). The drive voltages SU, SV and SW are output to the indoor fan motor M22 from each of the connection points NV, NU and NW of each of the transistors Q3a and Q3b, Q4a and Q4b, and Q5a and Q5b. That is, the inverter 38 supplies power to the indoor fan motor M22.

### (2-5-2) Fan control microcomputer

The fan control microcomputer 39 is a microcomputer comprised of RAM, ROM and CPU and the like, and is connected to the inverter 38. The fan control microcomputer 39 is a computer exclusively for controlling the drive of the indoor fan motor M22, and performs control that determines the drive voltages SU, SV and SW that the inverter 38 should output to the indoor fan motor M22 using the results detected by the voltage detecting part 34.

As shown in FIG. 1, this kind of fan control microcomputer 39 has primarily, the gate drive part 40 and the sensorless control part 41.

### (2-5-2-1) Gate drive part

The gate drive part 40 causes changing between the on state and the off state of each of the transistors Q3a through Q5b of the inverter 38 based on a voltage command value Vpwm from the sensorless control part 41. Specifically, the gate drive part 40 generates the gate control voltages Gu, Gx, Gv, Gy, Gw and Gz supplied to the gates of each of the transistors Q3a through Q5b such that the drive voltages SU, SV and SW having the duty as determined by the sensorless control part 41 are output from the inverter 38 to the indoor fan motor M22. The generated gate control voltages Gu, Gx, Gv, Gy, Gw and Gz are supplied to the gate terminals of the transistors Q3a through Q5b respectively.

Here, the voltage command value Vpwm is a command value for prescribing parameters relating to the drive voltages SU, SV and SW. The voltage command value Vpwm is determined in connection with the value for the DC voltage Vdc and the value for the motor current Im detected from the voltage detecting part 34 and the current detecting part 36, and the q-axis current command value Vq and the d-axis current command value Vd described subsequently, and is output from the sensorless control part 41. Parameters related to the drive voltages SU, SV and SW could include the respective duties, frequencies and voltage values and the like of the drive voltages SU, SV and SW. In this embodiment, the case in which voltage command value Vpwm is a command value for prescribing the duties of the drive voltages SU, SV and SW, that is, the case in which the indoor fan motor M22 is subject to PWM control, is taken as an example.

### (2-5-2-2) Sensorless control part

The sensorless control part 41 is connected to the voltage detecting part 34, the current detecting part 36, the gate drive part 40, and the main control microcomputer 43. The sensorless control part 41 is a functional part for drive control of the indoor fan motor M22 by a sensorless system (more specifically, a rotor position sensorless system).

More specifically, the indoor fan motor M22, firstly, starts by the DC excitation system or a forced drive system. DC excitation system is a system in which, by supplying direct current to the indoor fan motor M22 immediately prior to start up, the position of the rotor 22b in the indoor fan motor M22 is fixed once in a predetermined position, and drive of the indoor fan motor M22 is caused to commence from that state in which the rotor 22b is fixed. Forced drive system is a system in which the indoor fan motor M22 is forced to start by forced application of current supplying drive voltages SU, SV and SW having a certain voltage value and frequency to the indoor fan motor M22.

Then the sensorless control part 41 estimates the position of the rotor 22b of the indoor fan motor M22 after start-up, and based on that estimated position of the rotor 22b, estimates the rotation number of the indoor fan motor M22. The estimated rotation number of the indoor fan motor M22 is input to the main control microcomputer 43 as rotation number signal FG. Further, when an operation command including a rotation number command Vfg is sent from the main control microcomputer 43, the sensorless control part 41, using this operation command, the estimated position of the rotor 22b, the estimated rotation number, the result detected by the voltage detecting part 34, and the result detected by the current detecting part 36, determines the duty of the drive voltages SU, SV and SW for each control timing by the rotor position sensorless system, as a voltage command value Vpwm.

Here, the rotor position sensorless system means a system for performing PI control or the like for the motor current Im, and PI control or the like in respect of the rotation number, the estimated rotation number and the estimated position of the rotor 22b, using various kinds of parameters that indicate the characteristics of the indoor fan motor M22, DC voltage Vdc (that is, a result detected by the voltage detecting part 34), motor current Im (that is, a result detected by the current detecting part 36), and a predetermined mathematical model or the like for controlling the indoor fan motor M22. The various parameters indicating characteristics of the indoor fan motor M22 could include the winding resistance used for the indoor fan motor M22, inductance component, induced voltage and the number of poles or the like.

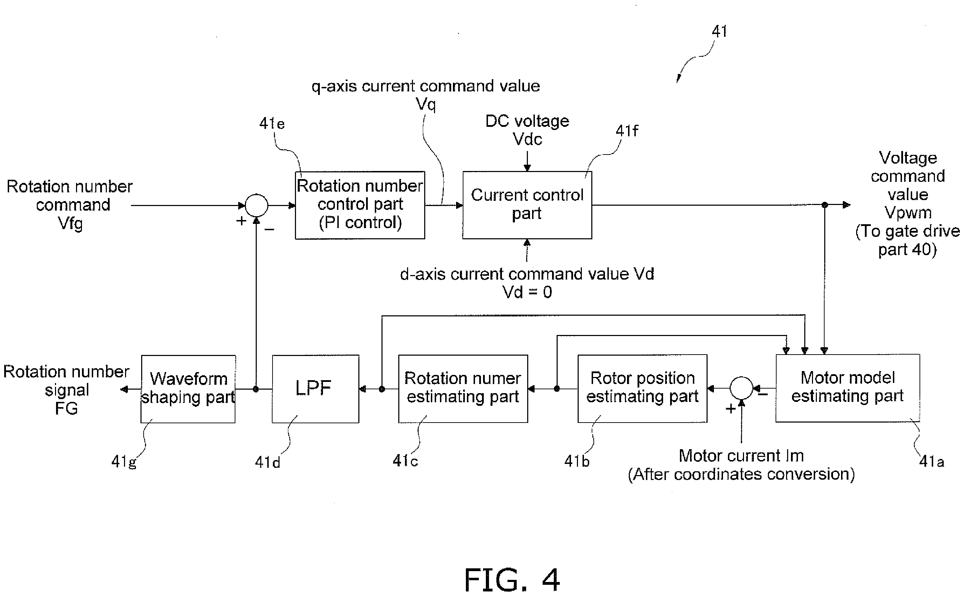

FIG. 4 shows, in simplified view, an example the configuration of the sensorless control part 41 that performs the above described control. The sensorless control part 41 shown in FIG. 4 comprises primarily, a motor model calculating part 41a, a rotor position estimating part 41b, a rotation number estimating part 41c, LPF41 d, a rotation number control part 41e and a current control part 41f.

The voltage command value Vpwm, estimated position of the rotor 22b, and estimated rotation number are input to the motor model calculating part 41a. The motor model calculating part 41a, using the various kinds of parameters indicating the characteristics of the indoor fan motor M22 as a motor model, calculate an ideal value of the motor current Im from that information as input.

The actual motor current Im value as detected from the current detecting part 36 is then subtracted from the ideal value thus calculated by the motor model calculating part 41a. When the result obtained from that calculation is input to the rotor position estimating part 41b, the rotor position estimating part 41b uses that result to estimate the position of the rotor 22b at that point in time. The rotation number estimating part 41c uses the position of the rotor 22b thus estimated, to estimate the rotation number of the indoor fan motor M22 at that point in time. Each of the results estimated by the rotor position estimating part 41b and the rotation number estimating part 41c are used for correction of the motor model and a correction process in the motor model calculating part 41a such that the difference between the ideal value for the motor current Im and the actual value for the motor current Im becomes "0".

LPF41d removes a noise component and a harmonic component from the estimated rotation number. The rotation number of the indoor fan motor M22 output from LPF41d is made the desired rotation number signal FG by a waveform shaping part 41g, which is then output to the main control microcomputer 43. The rotation number signal FG is a pulse signal having a cycle in conformance with the rotation number of the indoor fan motor M22, or the frequency is fixed and is a pulse signal having a duty in conformance with the rotation number of the indoor fan motor M22.

Further, the rotation number of the indoor fan motor M22 output from LPF41d is then subtracted from rotation number command Vfg included in an operation command sent from the main control microcomputer 43. The rotation number control part 41e, receiving input of the result of this subtraction process, uses that result to perform PI control of the rotation number of the indoor fan motor M22. The current control part 41f performs current control based on the q-axis current command value Vq being the control result from the rotation number control part 41e, a command "Vd=0" for example, such that d-axis current command value Vd becomes "0", and the current voltage Vdc as detected by the voltage detecting part 34, and generates a voltage command value Vpwm such that motor current Im is current based on these commands. This kind of voltage command value Vpwm including duties for drive voltages SU, SV and SW generated by control from such as the current control part 41f, is then input to the gate drive part 40. Further, the voltage command value Vpwm is input to the motor model calculating part 41a and used to further correct the motor model.

Here, in this embodiment, in addition to prescribing the magnetic flux direction produced by the permanent magnet of the rotor 22b as d-axis, the dq coordinates system used prescribes the direction advanced π/2 from this as q-axis. "q-axis current command value Vq" above, is a command value for q-axis current contributed to the torque of the indoor fan motor M22. Further, "d-axis current command value" as above, is a command value of d-axis current (that is excitation current that is the component producing magnetic flux) not contributed to the torque of the indoor fan motor M22.

### (2-6) Level shifter

As shown in FIG. 1, the level shifter 42 is connected in parallel to the smoothing capacitor 33. Voltage of both terminals of the smoothing capacitor 33 (that is, DC voltage Vdc) is supplied to the level shifter 42. The output of the level shifter 42 is connected to the fan control microcomputer 39 and the main control microcomputer 43. This level shifter 42 converts the supplied DC voltage Vdc to two predetermined voltages V1, V2 that are mutually different values, and supplies the converted predetermined voltages V1, V2 as power supply voltage to the fan control microcomputer 39 and the main control microcomputer 43 respectively.

That is, the level shifter 42 functions as a power source for each of the microcomputers 39 and 43. For example in the case in which the DC voltage Vdc is 140V, the level shifter 42 converts this DC voltage Vdc to voltage V1 of 3V and voltage V2 of 5V. The 3V voltage V1 is the power supply voltage supplied to the main control microcomputer 43. The 5V voltage V2 is the power supply voltage supplied to the fan control microcomputer 39.

Additionally, the level shifter 42 may further convert the DC voltage Vdc to the power supply voltage (for example, 15V) for controlling the inverter 38, in the same way as the above.

### (2-7) Main control microcomputer

The main control microcomputer 43 is a microcomputer comprising RAM, ROM and CPU or the like, and is connected to the fan control microcomputer 39. Further, the main control microcomputer 43 is connected to a remote controller, an indoor control part and an outdoor control part or the like (not shown in the drawings). The main control microcomputer 43 performs overall control of the plurality of devices included in the air conditioner 10 (the compressor 12, the four-way switching valve 13, the outdoor fan 18 and the indoor fan 22 and the like).

For example, when an instruction to commence operation is made from the remote controller, the main control microcomputer 43 outputs to the outdoor control part an instruction to start the compressor motor M12 and the outdoor fan motor M18 as an operation commence instruction. Further, when an operation commence instruction is made from the remote controller, the main control microcomputer 43 outputs to the indoor control part, an instruction to start up the indoor fan motor M22. Moreover the main control microcomputer 43 monitors the rotation number signal FG indicating the rotation number of the indoor fan motor M22, and outputs operation commands including the rotation number command Vfg to the sensorless control part 41.

Particularly by causing the drive power supply part 35b to supply or cut off switch drive power Vsw to the power consumption reduction switch 35a, the main control microcomputer 43 implements control turning the power consumption reduction switch 35a on and off as described below.

### (3) Operations of the power consumption reduction switch and the indoor fan motor

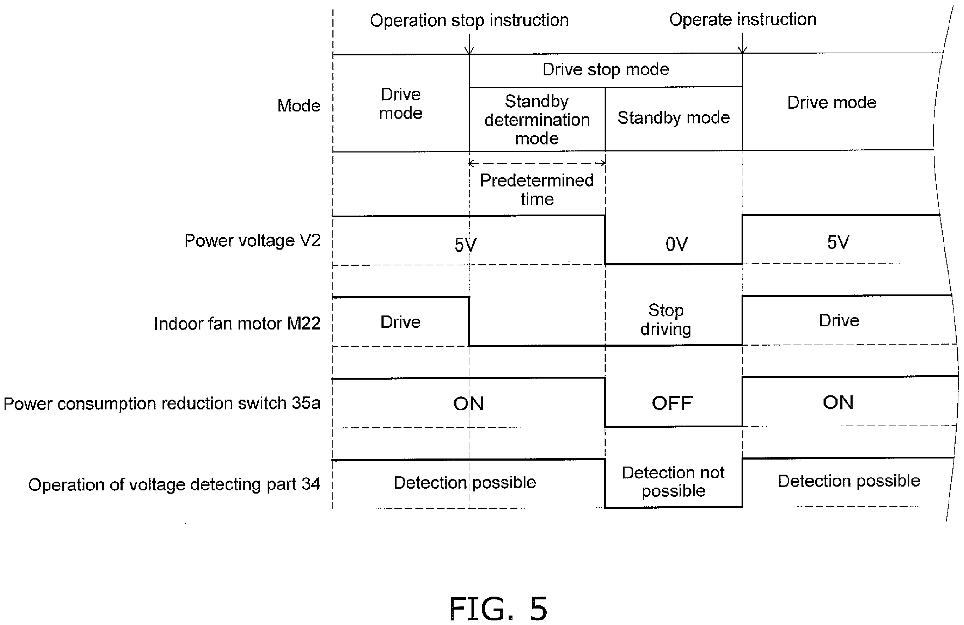

The timing at which the power consumption reduction switch 35a switches from on to off, and switches from off to on, and the operation of the indoor fan motor M22 will now be described. FIG. 5 is a timing chart showing how the mode can be taken by the indoor fan motor M22, power voltage V2 supplied to the fan control microcomputer 39, the operation state of the indoor fan motor M22, the states taken by the power consumption reduction switch 35a and the operation of the voltage detecting part 34, change through time.

During "drive mode" shown in FIG. 5, the air conditioner 10 is in the state of operating. Specifically, when focusing on the indoor fan motor M22, in the case of "drive mode", power voltage V2 of 5V is supplied to the fan control microcomputer 39, and the fan control microcomputer 39 is in the state of performing drive control of the indoor fan motor M22. Thus, the indoor fan motor M22 is driving. The drive power supply part 35b is supplying switch drive voltage Vsw to the power consumption reduction switch 35a. The power consumption reduction switch 35a is on, the terminal connected to the GND side of the voltage detecting part 34 and the GND line L1 are connected. Accordingly, in the voltage detecting part 34, current flows from the smoothing capacitor 33, via the voltage detecting part 34 to the GND line L1. Thus, the voltage detecting part 34 is able to detect the value of voltage of both terminals of the smoothing capacitor 33 (that is, DC voltage Vdc) that is necessary for drive control of the indoor fan motor M22.

In the case for example in which the user issues an operation stop instruction from the remote controller (not shown in the drawing), the mode transitions from "drive mode" to "drive stop mode", and the air conditioner 10 stops operation. "Drive stop mode" has further detailed modes, "standby determination mode" and "standby mode", the period from issuing the operation stop instruction until a predetermined time, being "standby determination mode". "Standby determination mode" is a mode for determining whether it is suitable to transition to "standby mode". "Standby mode" is a mode for causing each of the devices inside the air conditioner 10 to stop operating as much as possible, by for example cutting supply of power voltage V2 to the drive power supply part 35b and the fan control microcomputer 39 from the level shifter 42. That is, in "standby mode", the quantity of power consumed by the air conditioner 10 is saved, as much as possible, by a state in which only the minimum devices are started (standby condition), so that each of the devices can start up immediately when the next operate instruction is received. The determination of whether it is suitable to transition from the "standby determination mode" to "standby mode" is performed by the main control microcomputer 43.

Thus when an operation stop instruction is issued, at the timing of transition from "drive mode" to "standby determination mode" in "drive stop mode", firstly drive of the indoor fan motor M22 is stopped, and the air conditioner 10 stops operation. When the predetermined time from the operation stop instruction has elapsed, at the timing of the transition from "standby determination mode" to "standby mode", the main control microcomputer 43 implements control to switch the power consumption reduction switch 35a from on to off, and controls the level shifter 42 so as to cut supply of power voltage V2 to the fan control microcomputer 39 and the drive power supply part 35b. Due to this, when the predetermined time from issuance of the operation stop instruction has elapsed, the fan control microcomputer 39 enters a state of stopping control of the indoor fan motor M22. Further, by cutting power voltage V2 to the drive power supply part 35b, the power consumption reduction switch 35a switches from on to off. Accordingly, by cutting off the current path from the voltage detecting part 34 to the GND line L1, flow of current inside the voltage detecting part 34 stops, and the voltage detecting part 34 enters the state of not performing the operation to detect the value of DC voltage Vdc.

On the other hand, during "standby mode", at the timing of the user issuing an operate instruction via the remote controller (not shown in the drawing), supply of power voltage V2 from the level shifter 42 to the fan control microcomputer 39 and the drive power supply part 35b recommences. In this way, the start-up operation of the indoor fan motor M22 commences. Simultaneously, as switch drive power Vsw is supplied to the power consumption reduction switch 35a, the power consumption reduction switch 35a turns on. Accordingly, the current path from the voltage detecting part 34 to GND line L1 is reformed, and current comes to flow from the smoothing capacitor 33, passing inside the voltage detecting part 34 to GND line L1. Hence the voltage detecting part 34 is enabled to detect the value of voltage of both terminals of the smoothing capacitor 33 (that is, DC voltage Vdc).

Note that as described above, the judging of mode transition is performed by the main control microcomputer 43, therefore supply of power to the main control microcomputer 43 must be continuous. In other words, during "standby mode", power voltage V1 is required to be supplied to the main control microcomputer 43. In line with this, for both the level shifter 42, and the DC voltage generator 31 that is the conversion source, at least those parts associated with supply of power voltage V1 must continue operating even in "standby mode".

### (4) Characteristics

### (4-1)

In the actuator drive device 30 according to this embodiment, during "drive mode" in which the indoor fan motor M22 that is the actuator, is driving, the power consumption reduction switch 35a of the switching unit 35 is on, thus current flows in the voltage detecting part 34. However, during "drive stop mode" in which the indoor fan motor M22 stops driving, the power consumption reduction switch 35a goes to off, thus current stops flowing in the voltage detecting part 34. Accordingly, it is possible to prevent consumption of power in the voltage detecting part 34 through current flowing therein notwithstanding that it is not necessary to detect DC voltage Vdc because drive of the indoor fan motor M22 is stopped.

### (4-2)

With the actuator drive device 30 according to this embodiment, when a predetermined time from when the indoor fan motor M22 stops driving has elapsed, the power consumption reduction switch 35a in the switching unit 35 turns off, thus flow of current to the voltage detecting part 34 is cut. That is, in this embodiment, in the case in which it is certainly suitable for function of the voltage detecting part 34 to be stopped, flow of current to the voltage detecting part 34 is cut, and the operation of detecting a value for DC voltage Vdc by the voltage detecting part 34 comes to stop.

### (4-3)

With the actuator drive device 30 according to this embodiment, when the indoor fan motor M22 that is in the drive stopped state commences driving, the power consumption reduction switch 35a in the switching unit 35 turns on, and current flows in the voltage detecting part 34. Thus, during the time in which the indoor fan motor M22 drives, detection of a value for direct-current Vdc by the voltage detecting part 34 is performed. Accordingly, during the time in which the indoor fan motor M22 drives, the indoor fan motor M22 is able to drive with drive voltages SU, SV and SW based on results detected by the voltage detecting part 34, without being affected by the switching unit 35 (particularly, the power consumption reduction switch 35a) provided.

### (4-4)

The voltage detecting part 34 according to this embodiment is connected in parallel to the DC voltage generator 31. The power consumption reduction switch 35a in the switching unit 35 is connected in series to the voltage detecting part 34. Thus it is possible to restrain cost because the switching unit 35 according to this embodiment is of a simple configuration.

### (4-5)

The switching unit 35 according to this embodiment switches the flow of current to the voltage detecting part 34 by supplying switch drive power Vsw by the drive power supply part 35b to the power consumption reduction switch 35a or by shutting off the supply of switch drive power Vsw. That is, the flow of current to the voltage detecting part 34 can easily be switched by supplying or not supplying switch drive power Vsw to the power consumption reduction switch 35a.

### (4-6)

In this embodiment, among the plurality of devices included in the air conditioner 10, what is driven by the actuator drive device 30 is the indoor fan motor M22, that is the drive source of the indoor fan 22. Incidentally, as shown in FIG. 1, the fan control microcomputer 39 and the inverter 38 are included in the drive voltage generator 37. The fan control microcomputer 39 uses results detected by the voltage detecting part 34 (that is, the value of DC voltage Vdc), to control the determination of drive voltages SU, SV and SW. The inverter 38 generates the drive voltages SU, SV and SW as determined by the fan control microcomputer 39, and outputs these to the indoor fan motor M22. Then the power consumption reduction switch 35a in the switching unit 35, separate to the fan control microcomputer 39, is subject to switching control by the main control microcomputer 43 that performs overall control of the plurality of devices included in the air conditioner 10.

In this way, during "drive stop mode", even though the fan control microcomputer 39 together with the indoor fan motor M22 is in a function stopped state, the power consumption reduction switch 35a is subject to switching control by the main control microcomputer 43 that exists separately to the fan control microcomputer 39. Accordingly the power consumption reduction switch 35a switches with certainty.

### (4-7)

After the air conditioner 10 has stopped operating, the actuator drive device 30 no longer needs to use the detection result of the voltage detecting part 34. Thus, the power consumption reduction switch 35a in the switching unit 35 goes to off when a predetermined time from the time the air conditioner 10 stopped operating elapses, and shuts off the flow of current to the voltage detecting part 34. In this way, in the case in which it is certainly suitable for functioning of the voltage detecting part 34 to stop, the flow of the current to the voltage detecting part 34 and the operation to detect a value for DC voltage Vdc by the voltage detecting part 34 stops.

### (4-8)

Note that when driving a motor using a rotor position sensorless system, a value for DC voltage Vdc is required, thus it is necessary to provide the voltage detecting part 34. The actuator drive device 30 according to this embodiment drives the indoor fan motor M22 using a rotor position sensorless system, thus it becomes necessary to provide the voltage detecting part 34. However, as the switching unit 35 is further provided in the actuator drive device 30 according to this embodiment, it is possible to prevent regular flow of current to the voltage detecting part 34.

### (5) Modifications

Although an embodiment of the present invention has been described above with reference to the drawings, the specific configuration is not limited to the embodiment and modifications thereof as described herein, it being understood that modifications and variations will occur, without departing from the scope and spirit of this invention.

### (5-1) Modification 1A

As shown in FIG. 1, the above embodiment describes the case in which the switching unit 35 includes the power consumption reduction switch 35a and the drive power supply part 35b, however it is also suitable for the switching unit 35 to have only the power consumption reduction switch 35a, dispensing with the drive power supply part 35b.

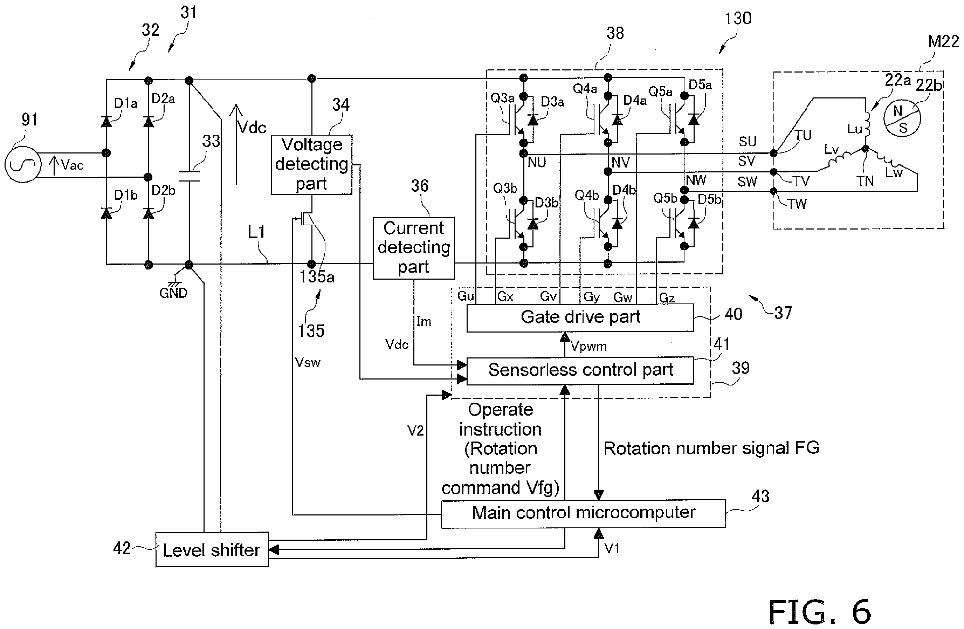

The configuration of an actuator drive device 130 of this case, is shown in FIG. 6. In FIG. 6, the gate terminal of a power consumption reduction switch 135a comprising a switching unit 135 is connected to the main control microcomputer 43. A switch control signal sent from the main control microcomputer 43, is supplied to the gate terminal of the power consumption reduction switch 135a as switch drive voltage Vsw. Thus, the power consumption reduction switch 135a is able to turn on and off. Note that the timing of the on and off of the power consumption reduction switch 135a is the same as the timing of the on and off of the power consumption reduction switch 35a described with reference to FIG. 5.

FIG. 6 shows the configuration of an actuator drive device 130 and the indoor fan motor M22 subject to drive control from the actuator drive device 130 according to modification 1A. Apart from the switching unit 135, each of the functioning parts provided to the actuator drive device 130 are of the same configuration as those described in the first embodiment with reference to FIG. 1.

Moreover, even though the switching unit 35 has the drive power supply part 35b as described in Fig.1, it is suitable for the power consumption reduction switch 35a to switch on and off in conformance with the state of switch control signals sent from the main control microcomputer 43 without the power consumption reduction switch 35a turning off and on in conformance with the supply or cut-off of supply of switch drive power Vsw.

### (5-2) Modification 1B

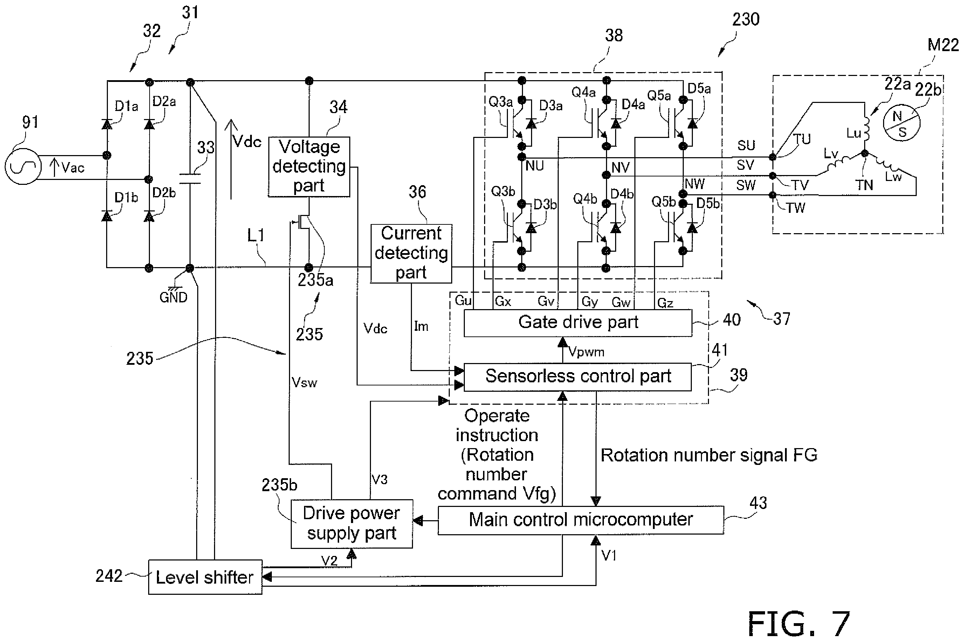

Further, it is suitable for the actuator drive device 30 related to the present invention to be the configuration of an actuator drive device 230 as shown in FIG. 7 instead of the configuration shown in FIG. 1.

In the actuator drive device 230 shown in FIG. 7, a switching unit 235 has a power consumption reduction switch 235a and a drive power supply part 235b. The power consumption reduction switch 235a is connected to the voltage detecting part 34 in series in the same manner as the power consumption reduction switch 35a shown in FIG. 1 related to the above described embodiment. Input port for input control signals of the drive power supply part 235b is connected to the main control microcomputer 43. The outputs of the drive power supply part 235b connect to the gate terminal of the power consumption reduction switch 235a and the fan control microcomputer 39.

In the same manner as described with respect to the above embodiment, the drive power supply part 235b generates switch drive power Vsw based on instructions from the main control microcomputer 43. Further, the drive power supply part 235b generates voltage V3 for driving the fan control microcomputer 39, and supplies this voltage V3 to the fan control microcomputer 39.

A level shifter 242 generates power voltage V1 of the main control microcomputer 43 and supplies this voltage to the main control microcomputer 43. Further, the level shifter 242 generates power voltage V2 of the drive power supply part 235b and supplies this voltage to the drive power supply part 235b. When the power voltage V2 is supplied, the drive power supply part 235b generates switch drive power Vsw and power voltage V3. Note that the power voltage V3 (corresponding to function part drive power) is the power voltage of the fan control microcomputer 39.

That is, the drive power supply part 235b is used not only as the power source of the power consumption reduction switch 235a, but also as the power source of the fan control microcomputer 39. In the case when the mode transitions from "standby determination mode" to "standby mode", the drive power supply part 235b cuts supply of switch drive power Vsw, and the power consumption reduction switch 235a switches from on to off, and here, it is also possible for the drive power supply part 235b to simultaneously cut supply of the power voltage V3 to the fan control microcomputer 39. Thus, during "standby mode" it becomes possible to suppress both power consumed by the voltage detecting part 34 and power consumed by the fan control microcomputer 39. Conversely, in the case in which the mode transitions from "standby mode" to "drive mode", the drive power supply part 235b can commence supply of switch drive power Vsw and supply of the power voltage V3.

Further, the drive power supply part 235b is able to shift the timing of supply of switch drive power Vsw and the timing of cut-off of supply of the power voltage V3. Moreover, the drive power supply part 235b is able to shift the timing of cut-off of supply of switch drive power Vsw and the timing of cut-off of supply of the power voltage V3.

In summary, the drive power supply part 235b not only performs supply and cut-off of supply of switch drive power Vsw, but also supply and cut-off of supply of the power voltage V3 to the fan control microcomputer 39. Thus, the drive power supply part 235b not only switches flow of current to the voltage detecting part 34 but can switch flow of current to the fan control microcomputer 39.

Further, the case in which the drive power supply part 235b is used jointly as a power source for both the power consumption reduction switch 235a and the fan control microcomputer 39 has been described above with respect to modification 1B. However, it is also suitable for the drive power supply part 235b to be used jointly for power supply for controlling the power consumption reduction switch 235a and the inverter 38. Again, it is suitable for the drive power supply part 235b to be used jointly as power supply for controlling the power consumption reduction switch 235a, the inverter 38, and as power supply for the fan control microcomputer 39.

### (5-3) Modification 1C

The above described embodiment envisages the case in which it is the value of DC voltage Vdc that is detected by the voltage detecting part 34, however it is also suitable for the voltage detecting part 34 to detect a value for any voltage. Accordingly, it is suitable for the subject to be detected operation by the voltage detecting part 34 to be not the voltage of direct current, but the voltage of alternating current. In this case, the voltage detecting part 34 detects AC voltage Vac of the commercial power supply 91 for example, then by estimating DC voltage Vdc from that detected value, the actuator drive device 30 is able to perform control in the same manner as described with respect to the above embodiment.

### (5-4) Modification 1D

It is suitable in the "standby mode" described with respect to the above embodiment, that supply of AC voltage Vac from the commercial power supply 91 to the outdoor unit 11 itself be cut by turning off the main power supply relay (not shown in the drawing) between the outdoor unit 11 and the commercial power supply 91, that is the drive power source. In this way, the quantity of power consumed in the outdoor unit 11 during "standby mode" can be further suppressed, in comparison to the case of the above embodiment.

Specifically, in the case as above in which the indoor unit 21 and the commercial power supply 91 are connected via a power outlet inside the house, there are cases in which power is supplied to the outdoor unit 11 via a main power supply relay for outdoor unit (or a switch) provided to the indoor control part (omitted in the drawing). In this case, by turning off the outdoor unit main power supply relay during "standby mode", supply of power to the outdoor unit 11 can be stopped. Power consumption in the entirety of the air conditioner 10 at that time is only that power consumed by the indoor unit 21, thus the effect of reducing power consumption through switching of the voltage detecting part 34 as proposed herein is further enhanced.

Note that it is suitable for power supplied to the outdoor unit 11 to be not restricted to alternating current but to be direct current also.

### (5-5) Modification 1E

The above embodiment has been described with respect to the case in which the actuator drive device 30 controls drive of the indoor fan motor M22 by a rotor position sensorless system.

However for drive control of the indoor fan motor M22, the present invention can also be supplied in a type of device that performs this control using a value for voltage of both terminals of the smoothing capacitor 33 (that is DC voltage Vdc). Accordingly, the actuator drive device 30 according to the present invention is not restricted to a type of device that controls drive of the indoor fan motor M22 by a rotor position sensorless system. For example, the present invention can be applied in a type of device in which the indoor fan motor M22 is mounted with a position detecting sensor (for example Hall elements) for detecting the position of the rotor 22b, and is controlled based on the results detected by that sensor.

Even in the case of not performing rotor position sensorless control, the actuator drive device 30 according to the present invention, as shown in FIG. 3 related to the above described embodiment for example, has the voltage detecting part 34 having therein a current path in which there is regular flow of current to GND line L1, and the switching unit 35 that is capable of cutting off the flow of current in the voltage detecting part 34. Thus, even in the case of not performing rotor position sensorless control, it is possible to prevent unnecessary consumption of power in the voltage detecting part 34.

Similarly, it is also suitable for the motor driven by the actuator drive device 30 to be not a brushless DC motor, but another kind of motor such as an induction motor driven by an inverter or the like.

### (5-6) Modification 1F

In the case of employing a rotor position sensorless system such as in the above described embodiment, it is difficult for the rotation number estimating part 41c in FIG. 4 to accurately estimate the rotation number of the indoor fan motor M22 directly after the indoor fan motor M22 starts up.

Thus, it is suitable for a rotation number detecting part for deriving the rotation number of the indoor fan motor M22 directly after start-up commences, to be provided separate to the sensorless control part 41. This kind of rotation number detecting part could for example employ a method for deriving rotation number using induced voltage arising in the drive coils LU, LV and LW of the indoor fan motor M22 as the indoor fan motor M22 rotates.

### (5-7) Modification 1G

The above embodiment, as shown in FIG. 5, is described with reference to the case in which, when an operation stop instruction is issued, after a predetermined time elapses from receipt of the operation stop instruction, the mode transitions from "standby determination mode" to "standby mode".

However, it is also suitable for the power consumption reduction switch 35a to switch from on to off together with the mode transitioning directly to "standby mode" from "drive mode" at the timing of the issuance of the operation stop instruction. That is, it is also suitable for the mode to transition from "drive mode" to "standby mode" without interposition of "standby determination mode".

Further, the above embodiment is described with respect to the case in which, at the timing of the issuance of the operate instruction, the mode transitions from "standby mode" to "drive mode" and the power consumption reduction switch 35a switches from off to on.

However, it is also suitable for the power consumption reduction switch 35a to switch from off to on together with the mode transitioning from "standby mode" to "drive mode" at the timing when a predetermined time elapses from issuance of an operate instruction.

### (5-8) Modification 1H

The above embodiment is described with respect to the case in which switching control of the power consumption reduction switch 35a is performed by the main control microcomputer 43, installed separately to the fan control microcomputer 39. However, it is also suitable for the power consumption reduction switch 35a to be subject to switching control by the fan control microcomputer 39. In this case, power voltage supplied to the fan control microcomputer 39 cannot be cut-off together with switch drive power Vsw.

### (5-9) Modification 1I

The above embodiment is described with respect to the case in which the power consumption reduction switch 35a is comprised from a MOSFET connected in series to the voltage detecting part 34, as shown in FIG. 1 and FIG. 3, however if the power consumption reduction switch 35a related to the present invention is a switch that is able to switch the flow of current inside the voltage detecting part 34, it is suitable to be connected in any way and comprised in any way. Accordingly, the configuration of the power consumption reduction switch 35a is not restricted to a MOSFET. That is, it is suitable for the power consumption reduction switch 35a to be an electromagnetic relay or other semiconductor switch such as an Insulated Gate Bipolar Transistor (IGBT) or a solid-state relay or the like.

### (5-10) Modification 1J

The above embodiment is described with respect to the case in which the actuator drive device 30 related to the present invention is used as a device for controlling drive of the indoor fan motor M22 that is the drive source for the indoor fan 22. However, the subject of drive control by the actuator drive device 30 is not limited to the indoor fan motor M22, and if the actuator is of a type that drives based on a detection result from the voltage detecting part 34, it is suitable for the subject of drive control to be the outdoor fan motor M18, the compressor motor M12 or the expansion valve 15.

Further, it is also suitable for the actuator drive device 30 to be used not as a device for driving the air conditioner 10, but as a device for driving an outdoor fan motor, a pump motor or a compressor motor or the like included in another heat pump device such as a water heater or the like.

### (5-11) Modification 1K

The above embodiment is described with respect to the case in which the voltage command value Vpwm is a command value for prescribing the duty of drive voltages SU, SV and SW, that is, the indoor fan motor M22 is subject to PWM control, however the present invention is not restricted to this case, and it is also suitable for the voltage command value Vpwm to be a command value for prescribing the frequencies and/or the voltage values of the drive voltages SU, SV and SW.

### (5-12) Modification 1L

The above embodiment is described with respect to an example in which by setting voltage command value Vpwm, the subject of direct control is voltage, what is known as a voltage inverter, however if the actuator drive device 30 related to the present invention is a device that performs drive control of the actuator based on results detected by the voltage detecting part 34, it is suitable for this device to be a chopper or a matrix converter or the like.

### (5-13) Modification 1M

The above embodiment is described with respect to the case in which the indoor fan motor M22 is a brushless DC motor, more specifically an SPM motor, however the types of brushless DC motor related to the present invention are not restricted to an SPM motor.

### (5-14) Modification 1N

The above embodiment is described with respect to the case in which the main control microcomputer 43 is located inside the indoor unit 21, however it is also suitable for the main control microcomputer 43 to be located inside the outdoor unit 11.

### <Second embodiment

A power supply device 300 related to a second embodiment of the present invention will now be described. Note that the following description is a specific example of the invention and is not intended to restrict the technical scope of the invention in any way.

### (1) Outline

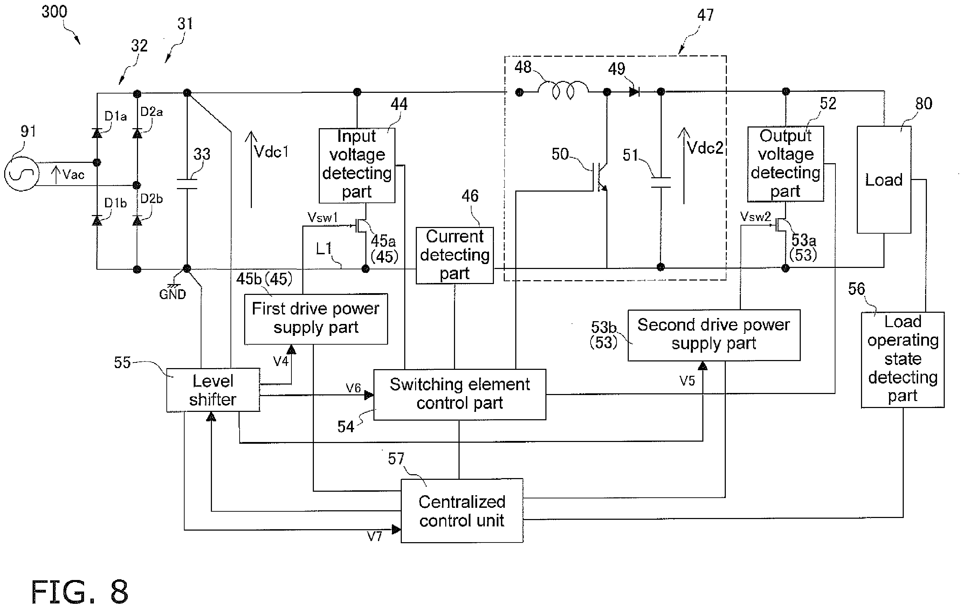

FIG. 8 is a block diagram showing the internal configuration of the power supply device 300. The power supply device 300 is mounted to for example, the air conditioner 10 or the like. The power supply device 300 is a device for supplying power to the load 80 of the compressor motor M12 or the inverter 38 or the like. Specifically, the power supply device 300 converts AC voltage Vac input from the commercial power supply 91 to DC voltage Vdc1, boosting the voltage, supplying power to the load 80 while improving the power factor in power supply input.

### (2) Power supply device

The power supply device 300 is connected to the commercial power supply 91 via for example, a power outlet inside the house at the input side, and at the output side is connected to the load 80. The power supply device 300 comprises primarily, a DC voltage generator 31, an input voltage detecting part 44, a first switching unit 45, a current detecting part 46, a boost chopper circuit 47, an output voltage detecting part 52, a second switching unit 53, a switching element control part 54, a level shifter 55, a load operating state detecting part 56, and a centralized control unit 57 and the like. These will now be described. Note that the DC voltage generator 31 is of the same configuration as that used for the actuator drive device 30, therefore a description of the DC voltage generator 31 is omitted.

### (2-1) Input voltage detecting part

The input voltage detecting part 44 is connected in parallel to the DC voltage generator 31 and the boost chopper circuit 47, between the DC voltage generator 31 and the boost chopper circuit 47. The input voltage detecting part 44 is configured in the same manner as the voltage detecting part 34 of the actuator drive device 30, and detects a value for input voltage of the boost chopper circuit 47. The results detected by the input voltage detecting part 44 are sent to the switching element control part 54.

In the input voltage detecting part 44 of this configuration, current associated with DC voltage Vdc1 supplied from the DC voltage generator 31 flows inside the input voltage detecting part 44, and the input voltage detecting part 44 detects a value for input voltage of the boost chopper circuit 47. Accordingly, the DC voltage generator 31 can be referred to as a "current supplying part" supplying current to the input voltage detecting part 44.

### (2-2) First switching unit

The first switching unit 45 is for switching the flow of current to the input voltage detecting part 44. The first switching unit 45 has primarily, a first power consumption reduction switch (hereinafter "first switch") 45a and a first drive power supply part 45b.

### (2-2-1) First switch

The first switch 45a is connected to the input voltage detecting part 44 in series and connected to the DC voltage generator 31 in parallel. The configuration of the first switch 45a is the same as that of the power consumption reduction switch 35a of the actuator drive device 30. The switching of the first switch 45a determines whether current flows or does not flow inside the input voltage detecting part 44.

Specifically, the first switch 45a is on when the switching element control part 54 is implementing control of a switching element 50 (described subsequently). As, due to this, current flows inside the input voltage detecting part 44, the first switch 45a can be said to cause the input voltage detecting part 44 to perform an operation to detect the input voltage of the boost chopper circuit 47.

Further, the first switch 45a is off when the switching element control part 54 stops performing control of the switching element 50. As, due to this, current does not flow inside the input voltage detecting part 44, the first switch 45a can be said to cause the input voltage detecting part 44 to stop performing an operation to detect the input voltage of the boost chopper circuit 47.

In this way, the first switch 45a switches between the on state and the off state in conformance with whether the switching element control part 54 is in the state of implementing control or the state of having stopped implementing control. As, due to this, regular flow of current to the input voltage detecting part 44 can be prevented, the first switch 45a can be said to be an electrical component for preventing unnecessary power consumption in the input voltage detecting part 44 that is configured such that current flows therein if DC voltage Vdc1 is being supplied.

### (2-2-2) First drive power supply part

The first drive power supply part 45b is comprised of a plurality of transistors and the like. The output of the first drive power supply part 45b is connected to the gate terminal of the first switch 45a.

The first drive power supply part 45b is connected to the level shifter 55, and supplied predetermined voltage V4 (described subsequently) from the level shifter 55. Further, the first drive power supply part 45b is connected to the centralized control unit 57. The first drive power supply part 45b, receiving a command from the centralized control unit 57, generates first switch drive power Vsw1 of the first switch 45a and outputs this to the first switch 45a. Accordingly, it can be said that switching the first switch 45a on and off is controlled by the centralized control unit 57.

Specifically, the first drive power supply part 45b, by supplying first switch drive power Vsw1 of for example 5V to the first switch 45a, causes the first switch 45a to turn on, such that current comes to flow inside the input voltage detecting part 44. Further, the first drive power supply part 45b, through cutting supply of first switch drive power Vsw1 to the first switch 45a, causes the first switch 45a to turn off, such that current does not flow in the input voltage detecting part 44.

Note that the specifics of the timing at which the first switch 45a switches from on to off or from off to on is described in "(3) Operation of the first switch, the second switch and the switching element control part".

### (2-3) Current detecting part

The current detecting part 46 is configured in the same manner as the current detecting part 36 of the actuator drive device 30. The current detecting part 46 is connected to the negative terminal side of the smoothing capacitor 33, between the smoothing capacitor 33 and the boost chopper circuit 47, and detects current flow in the load 80 and the boost chopper circuit 47. Specifically, as current flow in the load 80 and the boost chopper circuit 47 flows on GND line L1, the current detecting part 46, by detecting voltage of both terminals of the shunt resistor in conformance with the state of electrification, detects the current flowing to the load 80 and the boost chopper circuit 47. Then, the result detected by the current detecting part 46 is sent to the switching element control part 54.

### (2-4) Boost chopper circuit

The boost chopper circuit 47 boosts DC voltage Vdc1 supplied from the DC voltage generator 31 to a predetermined voltage Vdc2, and outputs this to the load 80. The boost chopper circuit 47 is connected in parallel to the input voltage detecting part 44 and the output voltage detecting part 52, between the input voltage detecting part 44 and the output voltage detecting part 52. The boost chopper circuit 47 has primarily, a boost choke coil 48, a reverse blocking diode 49, the switching element 50, and a smoothing capacitor 51.

The boost choke coil 48 is connected in series to the positive terminal side of the DC voltage generator 31. The reverse blocking diode 49 is connected in series at a subsequent stage to the boost choke coil 48. The switching element 50 is connected to the negative terminal side of the DC voltage generator 31 between the boost choke coil 48 and the reverse blocking diode 49. The switching element 50 is comprised of for example an Insulated Gate Bipolar Transistor (IGBT) or Field Effect Transistor (FET). The switching element 50 is switched between on and off by the switching element control part 54. The smoothing capacitor 51 smooths output voltage Vdc2 of the boost chopper circuit 47.

### (2-5) Output voltage detecting part

The output voltage detecting part 52 is connected in parallel to the boost chopper circuit 47 at a subsequent stage to the boost chopper circuit 47. The output voltage detecting part 52 is configured in the same manner as the voltage detecting part 34 of the actuator drive device 30, and detects a value for output voltage Vdc2 of the boost chopper circuit 47. Then the result as detected by the output voltage detecting part 52 is sent to the switching element control part 54.

### (2-6) Second switching unit

The second switching unit 53 is for switching the flow of current to inside of the output voltage detecting part 52. The second switching unit 53 has primarily, a second power consumption reduction switch (hereinafter, "second switch") 53a, and a second drive power supply part 53b.

### (2-6-1) Second switch

The second switch 53a is connected in series to the output voltage detecting part 52 and connected in parallel to the boost chopper circuit 47. The second switch 53a is configured in the same manner as the power consumption reduction switch 35a of the actuator drive device 30. The switching of the second switch 53a determines whether current flows or does not flow inside the output voltage detecting part 52.

Specifically, the second switch 53a is on when the switching element control part 54 is implementing control of the switching element 50. As, due to this, current flows inside the output voltage detecting part 52, the second switch 53a can be said to cause the output voltage detecting part 52 to perform an operation to detect the output voltage of the boost chopper circuit 47.

Further, the second switch 53a is off when the switching element control part 54 stops performing control of the switching element 50. As, due to this, current does not flow inside the output voltage detecting part 52, the second switch 53a can be said to cause the output voltage detecting part 52 to stop performing an operation to detect the output voltage of the boost chopper circuit 47.

In this way, the second switch 53a switches between the on state and the off state in conformance with whether the switching element control part 54 is in the state of implementing control or the state of having stopped implementing control. As, due to this, regular flow of current to the output voltage detecting part 52 is able to be prevented, the second switch 53a can be said to be an electrical component for preventing unnecessary power consumption in the output voltage detecting part 52.

### (2-6-2) Second drive power supply part

The second drive power supply part 53b is comprised of a plurality of transistors and the like. The output of the second drive power supply part 53b is connected to the gate terminal of the second switch 53a.

The second drive power supply part 53b is connected to the level shifter 55, and supplied a predetermined voltage V5 (described subsequently) from the level shifter 55. Further, the second drive power supply part 53b is connected to the centralized control unit 57. After receiving a command from the centralized control unit 57, the second drive power supply part 53b generates a second switch drive power Vsw2 of the second switch 53a, and outputs this to the second switch 53a. Accordingly, it can be said that switching the second switch 53a on and off is controlled by the centralized control unit 57.

Specifically, the second drive power supply part 53b, by supplying second switch drive power Vsw2 of for example 5V to the second switch 53a, causes the second switch 53a to turn on, such that current comes to flow inside the output voltage detecting part 52. Further, the second drive power supply part 53b, through cutting supply of second switch drive power Vsw2 to the second switch 53a, causes the second switch 53a to turn off, such that current does not flow in the output voltage detecting part 52.

Note that the specifics of the timing at which the second switch 53a switches from on to off or from off to on is described in "(3) Operation of the first switch, the second switch and the switching element control part ".

### (2-7) Switching element control part

The switching element control part 54 is a microcomputer comprised of RAM, ROM and CPU and the like, and controls the switching between on and off of the switching element 50.

Specifically, the switching element control part 54 performs switching control of the switching element 50 following preinstalled table or program, in accordance with, for example, the results detected by the input voltage detecting part 44, the current detecting part 46, and the output voltage detecting part 52. Thus, the switching element control part 54 boosts output voltage of the boost chopper circuit 47 to a set value, and improves the power factor by reducing the harmonic component in power input current.

Thus, as the switching element control part 54 implements control using the detection result of the input voltage detecting part 44, the current detecting part 46, and the output voltage detecting part 52, the switching element control part 54 can be called operate as a "detection result using part". Note that the preinstalled tables and programs of the switching element control part 54 are well known, and may be updated as required.

### (2-8) Level shifter

The level shifter 55 is connected in parallel to the smoothing capacitor 33, and is supplied with voltage of both terminals of the smoothing capacitor 33 (that is, DC voltage Vdc1). Outputs of the level shifter 55 are connected to the first drive power supply part 45b, the second drive power supply part 53b, the switching element control part 54 and the centralized control unit 57.

This kind of level shifter 55, converts the supplied DC voltage Vdc1 to four predetermined voltages, V4, V5, V6 and V7. Then the converted, predetermined voltage V4 is supplied to the first drive power supply part 45b, and the predetermined voltage V5 is supplied to the second drive power supply part 53b, respectively. Further, the level shifter 55 supplies the predetermined voltage V6 to the switching element control part 54, and the predetermined voltage V7 to the centralized control unit 57, respectively.

That is, the level shifter 55 functions as a power supply for the switching element control part 54 and the centralized control unit 57. For example if DC voltage Vdc1 is 140V, the level shifter 55 converts the DC voltage Vdc1 to voltages V4, V5 and V6 of 5V and voltage V7 of 3V.

### (2-9) Load operating state detecting part

The load operating state detecting part 56 is connected to the load 80 and detects the operating state of the load 80. Specifically, when the load 80 is in the state of operating, the load operating state detecting part 56 detects this in real time. When the load 80 is operating, the load operating state detecting part 56 generates a signal that indicates that the load 80 is operating, and sends this signal to the centralized control unit 57.

### (2-10) Centralized control unit

The centralized control unit 57 performs overall control of the operations of the first switching unit 45, the second switching unit 53, the switching element control part 54, and the level shifter 55. When the load 80 is operating, the centralized control unit 57 receives a signal from the load operating state detecting part 56 indicating that the load 80 is in the operating state. Thus the centralized control unit 57 is able to detect whether the load 80 is in the operating state or in the operation stopped state. Further, the centralized control unit 57 is provided with a timer function, and can measure time.

When it is not necessary to control the switching element 50, the centralized control unit 57 causes control of the switching element control part 54 to stop. For example, the centralized control unit 57, when the load 80 is operating, causes the switching element control part 54 to implement control. Further, when the load 80 has stopped operating, the centralized control unit 57 causes the switching element control part 54 to stop implementing control.

By causing the first drive power supply part 45b to supply or to cut-off supply of first switch drive power Vsw1 to the first switch 45a, the centralized control unit 57 controls the first switch 45a switching on and off. Further, by causing the second drive power supply part 53b to supply or to cut-off supply of second switch drive power Vsw2 to the second switch 53a, the centralized control unit 57 controls the second switch 53a switching on and off.

That is, when a detection result from the input voltage detecting part 44 and the output voltage detecting part 52 is required in the switching element control part 54 that is a "detection result using part", the centralized control unit 57 performs control to turn the first switch 45a and the second switch 53a on, such that current flows inside the input voltage detecting part 44 and the output voltage detecting part 52. Further, when a detection result from the input voltage detecting part 44 and the output voltage detecting part 52 is not required in the switching element control part 54 that is a "detection result using part", the centralized control unit 57 performs control to turn the first switch 45a and the second switch 53a off, such that current does not flow inside the input voltage detecting part 44 and the output voltage detecting part 52.

### (3) Operation of the first switch, the second switch, and the switching element control part

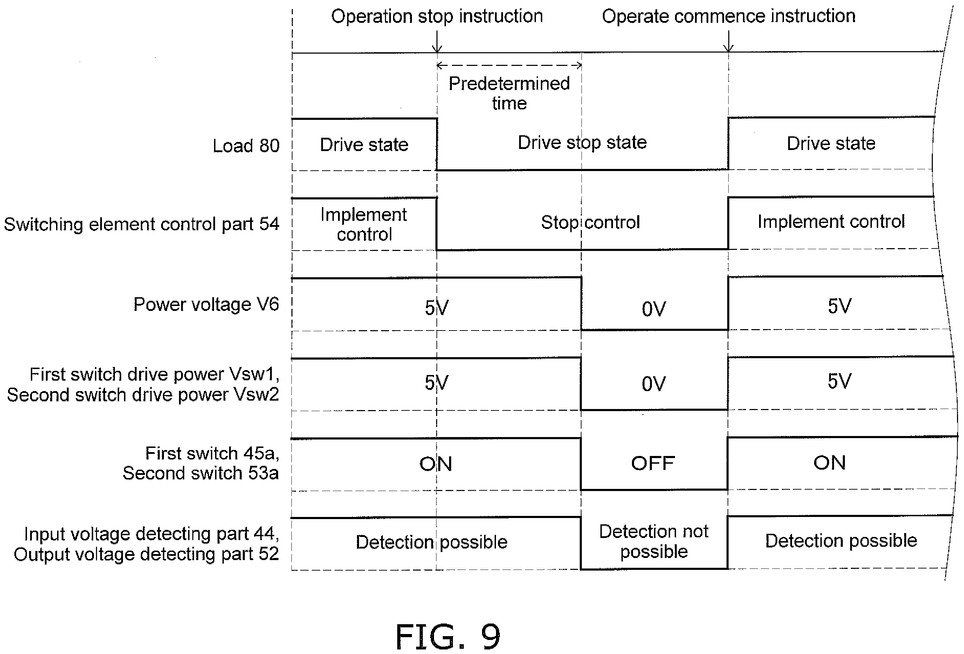

The timing at which the first switch 45a and the second switch 53a switch from on to off and from off to on, as well as the operations of the switching element control part 54 in this embodiment, will now be described. FIG. 9 is a timing chart showing how the operating state of the load 80, the state of implementation of control of the switching element control part 54, power voltage V6 supplied to the switching element control part 54, first switch drive power Vsw1 and second switch drive power Vsw2, the states of the first switch 45a and the second switch 53a, the operating state of the input voltage detecting part 44, and the operating state of the output voltage detecting part 52, change as time elapses.

In the case in which the load 80 is operating, power voltage V6 of 5V is being supplied to the switching element control part 54, and the switching element control part 54 is in the state of controlling the switching of the switching element 50. The first drive power supply part 45b is supplying first switch drive power Vsw1 to the first switch 45a. The second drive power supply part 53b is supplying second switch drive power Vsw2 to the second switch 53a. Thus the first switch 45a and the second switch 53a are in the on state. In this case, current is flowing in the input voltage detecting part 44, and the output voltage detecting part 52, such that it is possible to detect values for input voltage and output voltage of the boost chopper circuit 47 that are required for switching control from the switching element 50.

In this state, in the case for example in which the user issues an operation stop instruction to cause operation of the load 80 to stop, the load 80 enters the operation stopped state. The centralized control unit 57 detects that the load 80 has stopped operating, and sends a command to cause control from the switching element control part 54 to stop. The switching element control part 54, receiving this command, enters a control stopped state of stopping performance of control.

In the case in which the centralized control unit 57 judges that a predetermined time has elapsed from when the switching element control part 54 entered the control stopped state, the centralized control unit 57 sends a command to the level shifter 55 to cut-off power voltage V6 supplied to the switching element control part 54. Thus, supply of power voltage V6 to the switching element control part 54 is cut off. Note that the predetermined time is set for example at approximately 1 minute.

Further, together with the foregoing operations, the centralized control unit 57 sends a command to the first drive power supply part 45b and the second drive power supply part 53b to cut-off first switch drive power Vsw1 supplied to the first switch 45a and second switch drive power Vsw2 supplied to the second switch 53a. Thus, the first switch 45a and the second switch 53a switch from the on state to the off state. Accordingly, current stops flowing inside the input voltage detecting part 44 and the output voltage detecting part 52, these detecting parts 44 and 52 entering a state of being unable to perform a detection operation such that detection of voltage values is unable to be performed.

Next, in this state, if an operate commence instruction is issued by the user to cause the load 80 to commence operating, supply of power voltage V6 from the level shifter 55 to the switching element control part 54 recommences. Thus, the control of the switching element 50 commences, and together with this, first switch drive power Vsw1 is supplied to the first switch 45a and second switch drive power Vsw2 is supplied to the second switch 53a. Thus, the first switch 45a and the second switch 53a enter the on state. Accordingly, current flows inside the input voltage detecting part 44 and the output voltage detecting part 52 such that these detecting parts enter the detection capable state, being able to perform a detection operation.

### (4) Characteristics

### (4-1)

According to the power supply device 300 of this embodiment, as the first switch 45a and the second switch 53a are turned on when the switching element control part 54, that is a "detection result using part", requires a detection result from the input voltage detecting part 44 and the output voltage detecting part 52, current flows in the input voltage detecting part 44 and the output voltage detecting part 52. On the other hand, when the switching element control part 54 does not require a detection result from the input voltage detecting part 44 and the output voltage detecting part 52, the first switch 45a and the second switch 53a are turned off, such that current does not flow in the input voltage detecting part 44 and the output voltage detecting part 52.

Accordingly, it is possible to suppress wasteful power consumption due to current flowing to the input voltage detecting part 44 and the output voltage detecting part 52 notwithstanding that performance of an operation to detect input voltage and output voltage is not required because the switching element control part 54 has stopped performing switching control of the switching element 50.

### (4-2)

According to the power supply device 300 of this embodiment, as the first switch 45a in the first switching unit 45 and the second switch 53a in the second switching unit 53 are turned off when a predetermined time has elapsed from when the switching element control part 54 has stopped control of the switching element 50 (that is, usage of the detection result of the input voltage detecting part 44 and the output voltage detecting part 52 is stopped), the flow of current is cut-off to the input voltage detecting part 44 and the output voltage detecting part 52. That is, with this embodiment, in the case in which it is certainly suitable to stop function of the input voltage detecting part 44 and the output voltage detecting part 52, flow of current to the input voltage detecting part 44 and the output voltage detecting part 52 is cut-off, such that the detection operations of the input voltage detecting part 44 and the output voltage detecting part 52 are stopped.

### (4-3)

According to the power supply device 300 of this embodiment, by turning the first switch 45a in the first switching unit 45 and the second switch 53a in the second switching unit 53 off when the switching element control part 54 that is in the state of control stopped (that is, usage of the detection result of the input voltage detecting part 44 and the output voltage detecting part 52 is stopped), commences performing control, current flows in the input voltage detecting part 44 and the output voltage detecting part 52.

Thus, when the switching element control part 54 performs control (that is, uses the detection result of the input voltage detecting part 44 and the output voltage detecting part 52), the input voltage detecting part 44 and the output voltage detecting part 52 operate to detect voltage values. Accordingly, when the switching element control part 54 performs control, the switching element control part 54 is able to implement control based on the detection result of the input voltage detecting part 44 and the output voltage detecting part 52 without being affected by the fact that the first switching unit 45 and the second switching unit 53 are provided (particularly the first switch 45a and the second switch 53a).

### (4-4)

The input voltage detecting part 44 and the output voltage detecting part 52 in the power supply device 300 of this embodiment are connected to the DC voltage generator 31 in parallel. Further, the first switch 45a in the first switching unit 45 is connected to the input voltage detecting part 44 in series. The second switch 53a in the second switching unit 53 is connected to the output voltage detecting part 52 in series. Thus, the first switching unit 45 and the second switching unit 53 of this embodiment are of a simple configuration, and can be produced at low cost.

### (4-5)

The first switching unit 45 in the power supply device 300 of this embodiment switches the flow of current to the input voltage detecting part 44 by supplying or cutting of supply of first switch drive power Vsw1 from the first drive power supply part 45b to the first switch 45a. Further, the second switching unit 53 switches the flow of current to the output voltage detecting part 52 by supplying or cutting off supply of second switch drive power Vsw2 from the second drive power supply part 53b to the second switch 53a. That is, the flow of current to the input voltage detecting part 44 switches readily depending on whether or not first switch drive power Vsw1 is being supplied to the first switch 45a. Further, the flow of current to the output voltage detecting part 52 switches readily depending on whether or not second switch drive power Vsw2 is being supplied to the second switch 53a.

### (5) Modifications

### (5-1) Modification 2A

The second embodiment described above envisages the case in which it is the value of DC voltage Vdc 1 that is detected by the input voltage detecting part 44, however it is also suitable for the input voltage detecting part 44 to detect a value for any voltage. Accordingly, it is suitable for the subject of the detection operation by the input voltage detecting part 44 to be not the voltage of direct current, but the voltage of alternating current. In this case, the input voltage detecting part 44 detects AC voltage Vac of the commercial power supply 91 for example. Here, DC voltage Vdc is estimated from AC voltage Vac.

### (5-2) Modification 2B

The second embodiment described above, as shown in FIG. 9, is configured such that, when the user issues an instruction to stop operation of the load 80, after a predetermined time elapses, supply of power voltage V6 is cut-off, and the first switch 45a and the second switch 53a switch from on to off. However, this configuration is illustrative and not restrictive, and a configuration in which the supply of power voltage V6 is cut-off and the first switch 45a and the second switch 53a switch off at the timing at which the user issues the operation stop instruction for the load 80 is also suitable.

Further, the second embodiment is configured such that power voltage V6 is supplied and the first switch 45a and the second switch 53a switch from off to on at the timing at which the user issues an instruction to commence operation of the load 80. However, this configuration is illustrative and not restrictive, and a configuration in which power voltage V6 is supplied and the first switch 45a and the second switch 53a switch from off to on at the timing at which a predetermined time elapses (e.g. approximately 1 minute) from when the operation instruction is issued is also suitable.

Further, in the second embodiment, the predetermined time is set at approximately 1 minute, however this value is not restrictive, and can be changed to any suitable value.

### (5-3) Modification 2C

The second embodiment described above envisages the case in which the first switching unit 45 has the first switch 45a and the first drive power supply part 45b, while the second switching unit 53 has the second switch 53a and the second drive power supply part 53b. However, it is also suitable for the first switching unit 45 to not be provided with the first drive power supply part 45b, and to have only the first switch 45a. Again, it is also suitable for the second switching unit 53 to not be provided with the second drive power supply part 53b, and to have only the second switch 53a.

In this case, it is suitable for the gate terminal of the first switch 45a and the gate terminal of the second switch 53a, to be connected to the centralized control unit 57, and for switch control signals sent from the centralized control unit 57 to the respective gate terminals of the first switch 45a and the second switch 53a to be supplied as first switch drive power Vsw1 or second switch drive power Vsw2. Here, the first switch 45a and the second switch 53a can be switched between on and off. Note that the timing at which the first switch 45a and the second switch 53a switch between on and off is the same as the timing pursuant to the second embodiment as described with respect to FIG. 9.

Further, in the same manner, it is also suitable for the first switching unit 45 to have the first drive power supply part 45b, or for the second switching unit 53 to have the second drive power supply part 53b, but for the switching between on and off of the first switch 45a and the second switch 53a to not be performed in conformance with supply or cut-off of supply of first switch drive power Vsw1 and second switch drive power Vsw2, but to occur in conformance with a switch control signal sent from the centralized control unit 57.

### (5-4) Modification 2D

In the second embodiment described above, the first drive power supply part 45b and the second drive power supply part 53b switch between supplying or cutting off first switch drive power Vsw1 or second switch drive power Vsw2 to the first switch 45a or the second switch 53a in conformance with an instruction from the centralized control unit 57. However, it is also suitable to have a configuration in which the first drive power supply part 45b and the second drive power supply part 53b judge the switching between supplying or cutting of supply of first switch drive power Vsw1 or second switch drive power Vsw2.

In this case, it is suitable to have a configuration in which the first drive power supply part 45b and the second drive power supply part 53b, through being connected to the load operating state detecting part 56, determine whether or not the load 80 is in the operating state, and supply first switch drive power Vsw1 or second switch drive power Vsw2 when the load 80 is in the operating state, while cutting off supply when the load 80 is in the operation stopped state.

Again, it is suitable for the first drive power supply part 45b and the second drive power supply part 53b to be connected to the switching element control part 54, and to determine whether or not the switching element control part 54 is in the state of using the detection result of the input voltage detecting part 44 and the output voltage detecting part 52, by receiving a signal from the switching element control part 54 indicating that the switching element control part 54 is in the state of implementing control. The first drive power supply part 45b and the second drive power supply part 53b supply first switch drive power Vsw1 or second switch drive power Vsw2 when the switching element control part 54 is in the state of using the detection result of the input voltage detecting part 44 and the output voltage detecting part 52, and cut-off supply of first switch drive power Vsw1 or second switch drive power Vsw2 when the switching element control part 54 is in the state of not using these detection results.

### (5-5) Modification 2E

The second embodiment described above envisages the case in which the first switch 45a and the second switch 53a are comprised as a MOSFET connected in series to the input voltage detecting part 44 or the output voltage detecting part 52, in the same manner as the power consumption reduction switch 35a of the actuator drive device 30. However if the first switch 45a and the second switch 53a are capable of switching the flow of current to the input voltage detecting part 44 or the output voltage detecting part 52, then any connection arrangement and any configuration are suitable. Accordingly, the configuration of the first switch 45a and the second switch 53a is not restricted to a MOSFET. That is, it is suitable for the first switch 45a and the second switch 53a to be other electromagnetic relay or semiconductor switch such as an Insulated Gate Bipolar Transistor (IGBT) or a solid state relay or the like.

### <Third embodiment

A power supply voltage abnormality detection device 400 according to a third embodiment of the present invention will now be described. Note that the following description is a basic example of the invention and is not intended to restrict the technical scope of the invention in any way.

### (1) Outline

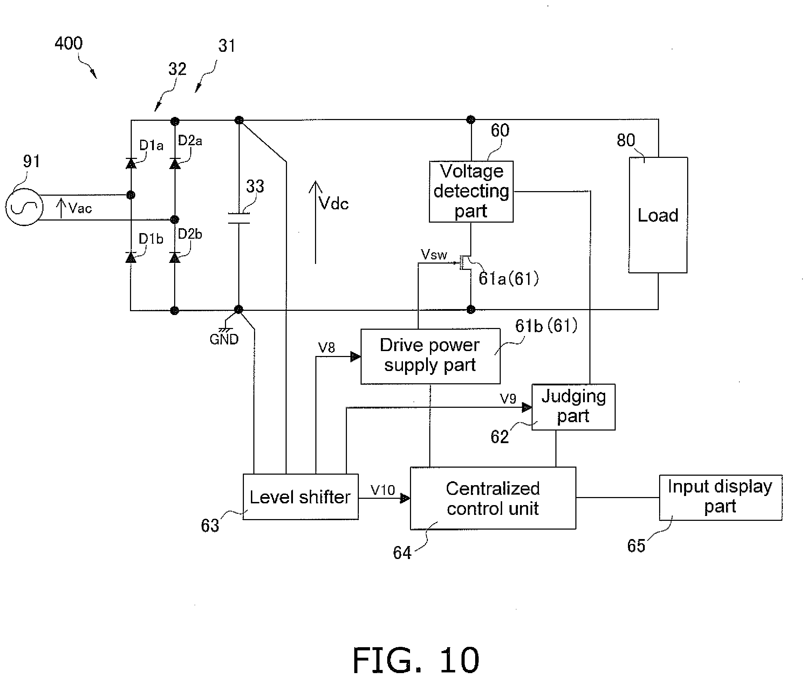

FIG. 10 is a block diagram showing the internal configuration of the power supply voltage abnormality detection device 400. The power supply voltage abnormality detection device 400 is mounted to for example, the air conditioner 10 or the like, and is a device for detecting an abnormality in the case when the power voltage supplied to the load 80 such as the compressor motor M12 or the inverter 38 or the like, differs to the supposed input voltage. Specifically, the power supply voltage abnormality detection device 400 converts AC voltage Vac input from the commercial power supply 91 to DC voltage Vdc, and detects a value for DC voltage Vdc. The power supply voltage abnormality detection device 400, by judging whether or not the voltage value detected is greater than a reference value, determines whether the AC voltage Vac is for example being supplied as either 100V or 200V, to detect an abnormality.

### (2) Power supply voltage abnormality detection device

The power supply voltage abnormality detection device 400 is connected to the commercial power supply 91 via for example a power outlet inside the house to the input side, and at the output side is connected to the load 80. The power supply voltage abnormality detection device 400 comprises primarily, a DC voltage generator 31, a voltage detecting part 60, a switching unit 61, a judging part 62, a level shifter 63, a centralized control unit 64, and an input display part 65 and the like. These will now be described. Note that the DC voltage generator 31 is of the same configuration as that used for the actuator drive device 30, therefore a description of the DC voltage generator 31 is omitted hereunder.

### (2-1) Voltage detecting part

The voltage detecting part 60 is connected in parallel to the DC voltage generator 31 and the load 80, between the DC voltage generator 31 and the load 80. The voltage detecting part 60 is configured in the same manner as the voltage detecting part 34 of the actuator drive device 30, and detects a value for voltage supplied to the load 80. The results detected by the voltage detecting part 60 are sent to the judging part 62.

The voltage detecting part 60, detects a value for voltage supplied to the load 80, as current associated with DC voltage Vdc supplied from the DC voltage generator 31 flows inside the voltage detecting part 60. Accordingly, the DC voltage generator 31 can be referred to as a "current supplying part" supplying current to the voltage detecting part 60.

### (2-2) Switching unit

The switching unit 61 is for switching the flow of current to the voltage detecting part 60. The switching unit 61 has primarily, a power consumption reduction switch (hereinafter" switch") 61 a and a drive power supply part 61b.

### (2-2-1) Switch

The switch 61a is connected to the voltage detecting part 60 in series and connected to the DC voltage generator 31 in parallel. The configuration of the switch 61a is the same as that of the power consumption reduction switch 35a of the actuator drive device 30. The switching of the switch 61a determines whether current flows or does not flow inside the voltage detecting part 60.

Specifically, the switch 61a is on when the judging part 62 is performing a determination. As, due to this, current flows in the voltage detecting part 60, the switch 61a is able to cause the voltage detecting part 60 to perform an operation to detect DC voltage Vdc.

Further, the switch 61a is off when the judging part 62 stops performing a determination. As, due to this, current does not flow inside the voltage detecting part 60, the switch 61a is able to cause the voltage detecting part 60 to stop performing an operation to detect DC voltage Vdc.

In this way, the switch 61a switches between the on state and the off state in conformance with whether the judging part 62 is implementing a determination or having stopped implementing a determination. As, due to this, continual flow of current to the voltage detecting part 60 can be prevented, the switch 61a can be an electrical component for preventing unnecessary consumption of power in the voltage detecting part 60 that is configured such that current flows therein if DC voltage Vdc is being supplied.

### (2-2-2) Drive power supply part

The drive power supply part 61b is comprised of a plurality of transistors and the like. The output of the drive power supply part 61b is connected to the gate terminal of the switch 61a.

The drive power supply part 61b is connected to the level shifter 63, and supplies predetermined voltage V8 (described subsequently) from the level shifter 63. Further, the drive power supply part 61b is connected to the centralized control unit 64, and upon receiving a command from the centralized control unit 64, generates switch drive power Vsw of the switch 61a and outputs this to the switch 61a. Accordingly, it can be said that the operation of switching the switch 61a on and off is controlled by the centralized control unit 64.

Specifically, the drive power supply part 61b, by supplying switch drive power Vsw of for example 5V to the switch 61a, causes the switch 61a to turn on, such that current comes to flow inside the voltage detecting part 60. Further, the drive power supply part 61b, through cutting supply of switch drive power Vsw to the switch 61a, causes the switch 61a to turn off, such that current does not flow in the voltage detecting part 60.

Note that the specifics of the timing at which the switch 61a switches from on to off or from off to on is described in "(3) Operation of the switch, and the judging part ".

### (2-3) Judging part

The judging part 62 is a microcomputer comprised of RAM, ROM and CPU and the like, and is arranged in series with the voltage detecting part 60, at a subsequent stage to the voltage detecting part 60.

The judging part 62 holds predetermined reference values, and upon receiving a command from the centralized control unit 64, determines whether or not the voltage value of DC current Vdc output from the voltage detecting part 60 is greater than or equal to a reference value. In the state in which current is not flowing to the load 80, due to operation of the DC voltage generator 31, DC voltage Vdc becomes approximately 140V when AC voltage Vac is 100V, and DC voltage Vdc becomes approximately 280V when AC voltage Vac is 200V. Thus, when the predetermined reference value is set at 180V for example, the predetermined reference value is not restricted to that set value, and can be changed as appropriate. The judging part 62 is connected to the centralized control unit 64 and determination results of the judging part 62 are sent to the centralized control unit 64.

Note that as the judging part 62 uses the detection result of the voltage detecting part 60 to perform a determination, the judging part 62 can be referred to as a "detection result using part".

### (2- 4) Level shifter

The level shifter 63 is connected in parallel to the smoothing capacitor 33, and is supplied with voltage of both terminals of the smoothing capacitor 33 (that is, DC voltage Vdc). Outputs of the level shifter 63 are connected to the drive power supply part 61b, the judging part 62, and the centralized control unit 64.

This kind of level shifter 63, converts the supplied DC voltage Vdc to three predetermined voltages, V8, V9, and V10. Then the converted, predetermined voltage V8 is supplied to the drive power supply part 61b, the predetermined voltage V9 is supplied to the judging part 62, and the predetermined voltage V10 is supplied to the centralized control unit 64.

That is, the level shifter 63 functions as a power supply for the drive power supply part 61b, the judging part 62, and the centralized control unit 64. For example if DC voltage Vdc is 140V, the level shifter 63 converts the DC voltage Vdc to voltage V8 and V9 of 5V, and voltage V10 of 3V.

### (2- 5) Centralized control unit

The centralized control unit 64 performs overall control of the operations of the switching unit61, the judging part 62 and the level shifter 63. The centralized control unit 64 is connected to the 65, and receives instructions from the user via the input display part 65. Further, the centralized control unit 64 is provided with a timer function, and can measure time.

When the centralized control unit 64 receives an instruction to commence an operation to judge if there is an abnormality (commence abnormality determination instruction) from the user via the input display part 65, the centralized control unit 64 judges whether or not DC voltage Vdc supplied to the load 80 is within a set voltage range for the load 80. Specifically, the centralized control unit 64 judges whether or not DC voltage Vdc supplied to the load 80 is within the set voltage range for the load 80 from a determination result of the judging part 62. Then, in the case that the determination result of the judging part 62 is greater than or equal to the reference value, the centralized control unit 64 judges that AC voltage Vac being supplied is for example 200V. In the case that the determination result of the judging part 62 is less than the reference value, the centralized control unit 64 judges that AC voltage Vac being supplied is for example 100V.

The centralized control unit 64 holds voltages for the load 80 that are predetermined in advance. In the case in which AC voltage Vac is 200V notwithstanding that the set voltage for the load 80 is 100V, or in the case in which AC voltage Vac is 100V notwithstanding that the set voltage for the load 80 is 200V, the centralized control unit 64 judges that there is a power supply voltage abnormality, and outputs the result as determined to the input display part 65.

Further, in the case in which the judging part 62 is required to perform a determination, the centralized control unit 64 causes the judging part 62 to perform a determination, and in the case in which it is not necessary for the judging part 62 to perform a determination, the centralized control unit 64 causes the judging part 62 to stop performing a detection operation. For example, if the centralized control unit 64, after receiving a commence abnormality determination instruction from the user via the input display part 65, judges that it is necessary for the judging part 62 to perform a determination, the centralized control unit 64 causes the judging part 62 to perform a determination. Further, if the centralized control unit 64, after receiving a commence abnormality determination instruction from the user via the input display part 65, judges that it is not necessary for the judging part 62 to perform a determination, the centralized control unit 64 causes the judging part 62 to stop performance of a determination.

Again, by causing the drive power supply part 61b to supply or to cut-off supply of switch drive power Vsw to the switch 61a, the centralized control unit 64 controls the switch 61a switching on and off. That is, when it is necessary for the judging part 62 that is a "detection result using part", to perform a determination (that is, when a detection result of the voltage detecting part 60 is required), the centralized control unit 64 performs control to turn the switch 61a on, such that current flows inside the voltage detecting part 60. Further, when it is not necessary for the judging part 62 that is a "detection result using part", to perform a determination (that is, when a detection result of the voltage detecting part 60 is not required), the centralized control unit 64 performs control to turn the switch 61a off, such that current is not flowing inside the voltage detecting part 60.

### (2-6) Input display part

The input display part 65 is comprised of for example, an input section such as operating keys or the like, and an LED lamp or liquid crystal monitor or the like. When the input display part 65 receives input of a commence abnormality determination instruction or a stop abnormality determination instruction from the user, the input display part 65 sends the instruction to the centralized control unit 64. Further, the input display part 65, after receiving a determination result of the centralized control unit 64, displays this determination result to the user.

### (3) Operation of the switch and the judging part

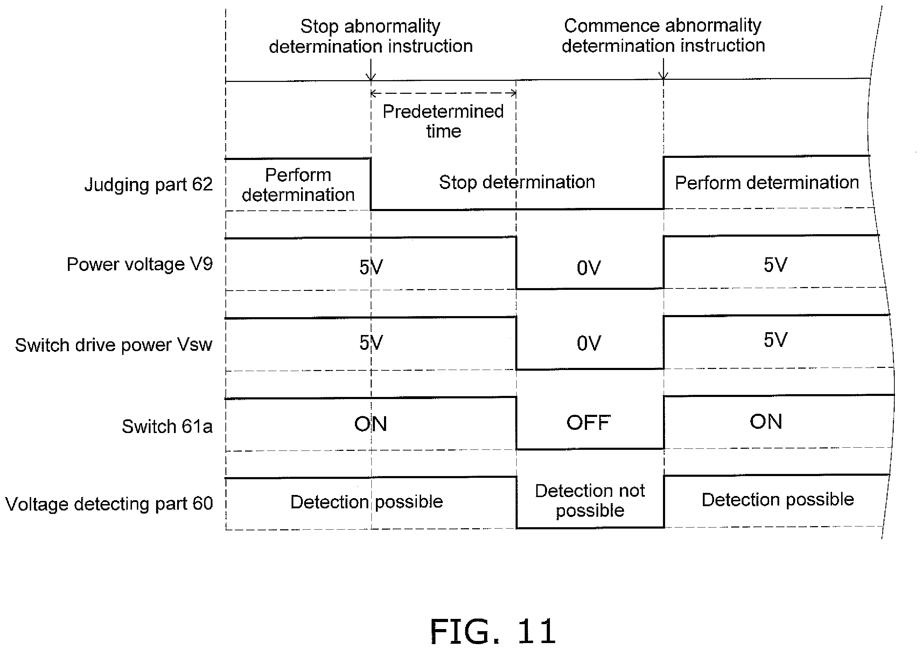

The timing at which the switch 61a switches from on to off and from off to on, as well as the operations of the judging part 62 or the like in this embodiment, will now be described. FIG. 11 is a timing chart showing how the state of implementation of control of the judging part 62, the state of the switch 61a, power voltage V9 supplied to the judging part 62, and the operating state of the voltage detecting part 60, change as time elapses.

In the case in which a commence abnormality determination instruction has been received from the user, power voltage V9 of 5V is being supplied to the judging part 62, and the judging part 62 is in the state of performing a determination. The drive power supply part 61b is supplying switch drive power Vsw to the switch 61a. Thus the switch 61a is in the on state. In this case, current is flowing in the voltage detecting part 60, such that it is possible to detect a value for DC voltage Vdc that is required for a determination of the judging part 62.

In this state, in the case in which for example the user issues a stop abnormality determination instruction to cause performance of a determination to stop, the centralized control unit 64, receiving this instruction from the input display part 65, sends to the judging part 62 an instruction to cause the judging part 62 to stop performing a determination. The judging part 62, receiving this instruction, enters a determination stopped state of stopping performing a determination.

In the case in which the centralized control unit 64 judges that a predetermined time has elapsed from when the judging part 62 entered the determination stopped state, the centralized control unit 64 sends a command to the level shifter 63 to cut-off power voltage V9 supplied to the judging part 62. Thus, supply of power voltage V9 to the judging part 62 is cut off.

Further, together with the foregoing operations, the centralized control unit 64 sends a command to the drive power supply part 61b to cut-off switch drive power Vsw supplied to the switch 61a. Thus, the switch 61a switches from the on state to the off state. Accordingly, current stops flowing inside the voltage detecting part 60, and the voltage detecting part 60 entering a state of being unable to perform a detection operation such that detection of DC voltage Vdc is unable to be performed.

Next, in this state, if a commence abnormality determination instruction is issued by the user to cause a determination operation to commence, the centralized control unit 64, receiving this instruction from the input display part 65, causes the level shifter 63 to recommence supplying power voltage V9. In this way, the judging part 62 commences a determination and enters a state of performing determination operations, while together with this, the centralized control unit 64 causes the drive power supply part 61b to recommence supply of switch drive power Vsw. Thus, the switch 61a enters the on state. Accordingly current flows inside the voltage detecting part 60, such that the voltage detecting part 60 enters the state of being able to detect DC voltage Vdc.

### (4) Characteristics

### (4-1)

According to the power supply voltage abnormality detection device 400 of this embodiment, when a detection result from the voltage detecting part 60 is necessary for the judging part 62, that corresponds to a "detection result using part", the switch 61a is turned on such that current flows inside the voltage detecting part 60. On the other hand, when a detection result from the voltage detecting part 60 is not necessary for the judging part 62, the switch 61a turns off, such that current does not flow inside the voltage detecting part 60.

Accordingly, it is possible to suppress wasteful power consumption due to current flowing in the voltage detecting part 60, notwithstanding that performance of an operation to detect DC voltage Vdc is not required because the judging part 62 has stopped performing detection.

### (4-2)

According to the power supply voltage abnormality detection device 400 of this embodiment, as the switch 61a in the switching unit 61 is turned off when a predetermined time has elapsed from when the judging part 62 stops performing determinations (that is, usage of the detection result of the voltage detecting part 60 stops), the flow of current is cut-off to the voltage detecting part 60. That is, with this embodiment, in the case in which it is certainly suitable to stop function of the voltage detecting part 60, flow of current in the voltage detecting part 60 is cut-off, such that the detection operation of the voltage detecting part 60 is stopped.

### (4-3)

According to the power supply voltage abnormality detection device 400 of this embodiment, by turning the switch 61a in the switching unit 61 on when the judging part 62 that has stopped performing a determination (that is usage of the detection result of the voltage detecting part 60 is stopped) commences performing a determination, current flows in the voltage detecting part 60.

Thus, when the judging part 62 performs a determination operation (that is, uses the detection result of the voltage detecting part 60), detection operations are performed by the voltage detecting part 60. Accordingly, when the judging part 62 performs a determination, the judging part 62 is able to perform a detection operation based on the detection result of the voltage detecting part 60, without being affected by the fact that the switching unit 61 (particularly the switch 61a) is provided.

### (4-4)

In the power supply voltage abnormality detection device 400 of this embodiment, the voltage detecting part 60 is connected to the DC voltage generator 31 in parallel. Further, the switch 61a in the switching unit 61 is connected to the voltage detecting part 60 in series. Thus, the switching unit 61 this embodiment is of a simple configuration, and can be produced at low cost.

### (4-5)

In the power supply voltage abnormality detection device 400 of this embodiment, the switching unit 61 switches the flow of current to the voltage detecting part 60 by supplying or cutting off supply of switch drive power Vsw from the drive power supply part 61b to the switch 61a. That is, the flow of current to the voltage detecting part 60 switches readily depending on whether or not switch drive power Vsw is being supplied to the switch 61a.

### (5) Modifications

### (5-1) Modification 3A

The third embodiment described above envisages the case in which it is the value of DC voltage Vdc that is detected by the voltage detecting part 60, however it is also suitable for the voltage detecting part 60 to detect a value for any voltage. Accordingly, it is suitable for the subject of the detection operation by the voltage detecting part 60 to be not the voltage of direct current, but the voltage of alternating current. For example, it is suitable for the voltage detecting part 60 to detect AC voltage Vac of the commercial power supply 91 for example. Here, a determination of abnormal voltage is performed based on a detected value for AC voltage Vac.

### (5-2) Modification 3B

The third embodiment described above, as shown in FIG. 11, is configured such that, when the user issues a stop abnormality determination instruction, after a predetermined time elapses, supply of power voltage V9 is cut-off, and the switch 61a switches from on to off. However, this configuration is illustrative and not restrictive, and a configuration in which the supply of power voltage V9 is cut-off and the switch 61a switches off at to the timing at which the user issues the stop abnormality determination instruction, is also suitable.

Further, the third embodiment is configured such that power voltage V9 is supplied and the switch 61a switches from off to on at the timing at which the user issues a commence abnormality detection instruction. However, this configuration is illustrative and not restrictive, and a configuration in which power voltage V9 is supplied and the switch 61a switches from off to on at the timing at which a predetermined time elapses (e.g. approximately 1 minute) from when the commence abnormality determination instruction is issued is also suitable.

Further, in the third embodiment, the predetermined time is set at approximately 1 minute, however this value is not restrictive, and can be changed to any suitable value.

### (5-3) Modification 3C

The third embodiment described above envisages the case in which the switching unit 61 has the switch 61a and the drive power supply part 61b. However, it is also suitable for the switching unit 61 to not be provided with the drive power supply part 61b, and to have only the switch 61a.

In this case, it is suitable for the gate terminal of the switch 61a to be connected to the centralized control unit 64, and for switch control signals sent from the centralized control unit 64 to the gate terminal of the switch 61a to be supplied as switch drive power Vsw. In this way, the switch 61a can be switched between on and off. Note that the timing at which the switch 61a switches between on and off is the same as the timing pursuant to the third embodiment as described with respect to FIG. 11.

In the same manner, it is also suitable for the switching unit 61 to have the drive power supply part 61b, but for the switching between on and off of the switch 61a to not be performed in conformance with supply or cut-off of supply of switch drive power Vsw, but to occur instead in conformance with a switch control signal sent from the centralized control unit 64.

### (5-4) Modification 3D

In the third embodiment described above, the drive power supply part 61b switches between supplying or cutting off switch drive power Vsw to the switch 61a in conformance with an instruction from the centralized control unit 64. However, it is also suitable to have a configuration in which the drive power supply part 61b itself judges the switching between supplying or cutting of supply of switch drive power Vsw.

In this case, it is suitable to have a configuration in which the drive power supply part 61b by being connected to the judging part 62 and receiving a signal from the judging part 62 indicating that the judging part 62 is performing a determination, determines whether or not the judging part 62 is using a detection result of the voltage detecting part 60. The drive power supply part 61b supplies switch drive power Vsw when the judging part 62 is using a detection result of the voltage detecting part 60, and cuts off supply of switch drive power Vsw when the judging part 62 is in the state of not using a detection result of the voltage detecting part 60.

### (5-5) Modification 3E

The third embodiment described above envisages the case in which the switch 61a is comprised as a MOSFET connected in series to the voltage detecting part 60, in the same manner as the power consumption reduction switch 35a of the actuator drive device 30. However if the switch 61a of the present invention is capable of switching the flow of current to the voltage detecting part 60, then any connection arrangement and any configuration are suitable. Accordingly, the configuration of the switch 61a is not restricted to a MOSFET. That is, it is suitable for the switch 61a to be other electromagnetic relay or semiconductor switch such as an Insulated Gate Bipolar Transistor (IGBT) or a solid state relay or the like.

### (5-6) Modification 3F

In the third embodiment described above, the judging part 62, after receiving an instruction from the centralized control unit 64, determines whether or not the voltage value of DC voltage Vdc output from the voltage detecting part 60 is greater than or equal to a reference value. However this is illustrative and not restrictive, and it is suitable to dispense with the judging part 62 by enabling the centralized control unit 64 to perform the functions of the judging part 62. That is, it is suitable for the centralized control unit 64 to determine whether or not the voltage value for DC voltage Vdc output from the voltage detecting part 60 is greater than or equal to a reference value.

### (5-7) Modification 3G

In the third embodiment described above, the judging part 62 determines whether or not the voltage value for DC voltage Vdc output from the voltage detecting part 60 is greater than or equal to a reference value, and outputs the determination result to the centralized control unit 64. However, this is illustrative and not restrictive, and it is suitable for the judging part 62 to hold in advance a predetermined determination value different to the reference value, and to send a signal to the centralized control unit 64 during the period in which the value for DC voltage Vdc exceeds the determination value.

That is, as there are ripples of some size in the DC voltage Vdc detected from the voltage detecting part 60, according to the setting of the determination value, there are periodic fluctuations in the periods during which DC voltage Vdc exceeds the determination value and periods during which DC voltage Vdc is less than the determination value. As the judging part 62 detects the periods during which the value for DC voltage Vdc exceeds the determination value and outputs a signal to the centralized control unit 64, the centralized control unit 64 can distinguish the periods during which DC voltage Vdc exceeds the determination value and the periods during which DC voltage Vdc is less than the determination value, and calculate those respective times. In this way, the centralized control unit 64 is able to detect, from that the calculated time, the frequency of AC voltage Vac supplied from the commercial power supply 91.

With this kind of configuration, the power supply voltage abnormality detection device 400 functions as a power supply frequency detection device. Note that in this case, the judging part 62 performs a determination using a detection result of the voltage detecting part 60, and can thus be said to be a "detection result using part". Note that the detection of power frequency can also be performed by detecting AC voltage Vac.

### REFERENCE SIGNS LIST

10 Air conditioner
10a Refrigerant circuit
11 Outdoor unit
12 Compressor
M12 Compressor motor
13 Four-way switching valve
14 Outdoor heat exchanger
15 Expansion valve
16 Liquid-side shut off valve
17 Gas-side shut off valve
18 Outdoor fan
M18 Outdoor fan motor
21 Indoor unit
22 Indoor fan
M22 Indoor fan motor
22a Stator
22b Rotor
23 Indoor heat exchanger
30 Actuator drive device (power consumption reduction device)
31 DC voltage generator (power generating part, current supply part)
32 Rectifying unit
33 Smoothing capacitor
34, 60 voltage detecting part
35, 61 Switching unit
35a, 61a Power consumption reduction switch (switch)
35b, 61b Drive power supply part
36, 46 Current detecting part
37 Drive voltage generator (drive signal generator)
38 Inverter (output)
39 Fan control microcomputer (determining part)
40 Gate drive part
41 Sensorless control part
42, 55, 63 Level shifter
43 Main control microcomputer (centralized control unit)
44 Input voltage detecting part
45 First switching unit
45a First power consumption reduction switch
45b First drive power supply part
47 Boost chopper circuit
50 Switching element
52 Output voltage detecting part
53 Second switching unit
53a Second power consumption reduction switch
53b Second drive power supply part
54 Switching element control part (detection result using part)
56 Load operating state detecting part
57, 64 Centralized control unit
62 Judging part (detection result using part)
65 Input display part
80 Load
91 Commercial power supply
100 Actuator drive control system
300 Power supply device (power consumption reduction device)
400 Power supply voltage abnormality detection device (power consumption reduction device)
Pi1, Pi2 Refrigerant pipe
Vac AC voltage
Vdc DC voltage
Vsw Switch drive power
Vsw1 First switch drive power
Vsw2 Second switch drive power
V3 Power voltage (function part drive power)
Im Motor current

### PATENT LITERATURE

Patent document 1
   Japanese Laid-open Patent Application No. 2012-120409
Patent document 2
   Japanese Laid-open Patent Application No. 2005-229792

## Claims

1. A power consumption reduction device (30, 130, 230) comprising:
a power generating part (31);
a voltage detecting part (34) configured and arranged to detect from current flowing therein, a value for voltage supplied from the power generating part;
a drive signal generating part (37) configured and arranged to generate a drive signal (SU, SV, SW) for driving an actuator (M22) based on a detection result of the voltage detecting part;
an electric current supply part (31) configured and arranged to supply current to the voltage detecting part; and
a switching part (35, 135, 235) configured and arranged to switch flow of current such that, during a drive mode in which the actuator drives, current flows in the voltage detecting part, while during a drive stop mode in which the actuator stops driving, current does not flow in the voltage detecting part,
wherein
the switching part (35, 135, 235) is configured to allow the current to flow into the voltage detecting part when the actuator which has stopped driving commences driving, and configured to cut the flow of the current to the voltage detecting part when a predetermined time has elapsed from when the actuator stopped driving.

2. A power consumption reduction device (30, 130, 230, 300, 400) comprising:
a power generating part (31);
a voltage detecting part (34, 44, 52, 60) configured and arranged to detect from current flowing therein, a value for voltage supplied from the power generating part;
a detection result using part (37, 54, 62) configured and arranged to use a detection result of the voltage detecting part;
an electric current supply part (31) configured and arranged to supply current to the voltage detecting part; and
a switching part (35, 45, 53, 61, 135, 235) configured and arranged to switch flow of current such that current flows in the voltage detecting part when the detection result is necessary for the detection result using part, and current does not flow in the voltage detecting part when the detection result is not required for the detection result using part,
wherein
the switching part (35, 45, 53, 61, 135, 235) is configured to cut flow of the current to the voltage detecting part (34) when a predetermined time has elapsed from when the detection result using part (37, 54, 62) stopped using the detection result.

3. The power consumption reduction device (30, 130, 230, 300, 400) according to claim 2, wherein the switching part is configured to allow the current to flow into the voltage detecting part when the detection result using part, having stopped using the detection result, commences using the detection result.

4. The power consumption reduction device (30, 130, 230) according to claim 1, wherein
the actuator is a motor that is a drive source of at least one of a plurality of devices included in an air conditioner (10);
the drive signal generating part includes
a determining part (39) configured and arranged to perform control of determining a drive signal using the detection result of the voltage detecting part, and
an output part (38) configured and arranged to generate the drive signal as determined by the determining part and output the drive signal to the actuator; and
the switching part is subject to switching control from a centralized control unit (43) configured and arranged to perform overall control of the plurality of devices included in the air conditioner, separate to the determining part of the drive signal generating part.

5. The power consumption reduction device (230) according to claim 4, wherein
the voltage detecting part is connected to the power generating part in parallel; and
the switching part has
a switch (235a) connected in series to the voltage detecting part, and
a drive power supply part (235b) configured and arranged to supply switch drive power to the switch, the drive power supply part also supplying to at least one of the determining part and the output part, function part drive power for driving at least one of the determining part and the output part, and
the drive power supply part, by either supplying or cutting supply of function part drive power, is configured to switch flow of current to at least one of the determining part and the output part, in addition to switching the flow of current to the voltage detecting part.

6. The power consumption reduction device (30, 130, 230) according to either of claim 4 or claim 5, wherein the switching part is configured to cut flow of current to the voltage detecting part when a predetermined time has elapsed from when the air conditioner stopped operating.

7. The power consumption reduction device (30, 130, 230) according to any of claim 1, claim 4 through claim 6, wherein the actuator is an indoor fan motor that is a drive source for an indoor fan (22) included in the air conditioner.

8. The power consumption reduction device (30, 130, 230, 300, 400) according to any of claim 1 through claim 4, claim 6 and claim 7, wherein the voltage detecting part is connected to the power generating part in parallel, and the switching part has a switch (35a, 45a, 53a, 61a) connected to the voltage detecting part in series.

9. The power consumption reduction device (30, 230) according to claim 8, wherein the switching part further has a drive power supply part (35b, 45b, 53b, 61b) configured and arranged to supply switch drive power to the switch, and is configured to switch the flow of current to the voltage detecting part by either supplying or cutting the switch drive power to the switch.

## Patentansprüche

1. Vorrichtung (30, 130, 230) zur Reduzierung des Stromverbrauchs, die aufweist:
einen Stromerzeugungsteil (31);
einen Spannungserfassungsteil (34), der konfiguriert und eingerichtet ist, aus dem darin fließenden Strom einen Wert der Spannung zu erfassen, die vom Stromerzeugungsteil zugeführt wird;
einen Ansteuersignalerzeugungsteil (37), der konfiguriert und eingerichtet ist, ein Ansteuersignal (SU, SV, SW) zum Ansteuern eines Antriebsglieds (M22) beruhend auf einem Erfassungsergebnis des Spannungserfassungsteils zu erzeugen;
einen elektrischen Stromversorgungsteil (31), der konfiguriert und eingerichtet ist, dem Spannungserfassungsteil Strom zuzuführen; und
einen Schaltteil (35, 135, 235), der konfiguriert und eingerichtet ist, den Stromfluss so zu schalten, dass während eine Ansteuermodus, in dem das Antriebsglied antreibt, Strom in den Spannungserfassungsteil fließt, während in einem Ansteuerstoppmodus, in dem das Antriebsglied den Abtrieb stoppt, kein Strom in den Spannungserfassungsteil fließt,
wobei
der Schaltteil (35, 135, 235) konfiguriert ist, den Strom in den Spannungserfassungsteil fließen zu lassen, wenn das Antriebsglied, das den Betrieb gestoppt hat, den Betrieb beginnt, und konfiguriert ist, den Stromfluss zum Spannungserfassungsteil zu unterbrechen, wenn eine vorgegebene Zeit verstrichen ist, seitdem das Antriebsglied den Betrieb gestoppt hat.

2. Vorrichtung zur Reduzierung des Stromverbrauchs (30, 130, 230, 300, 400), die aufweist:
einen Stromerzeugungsteil (31);
einen Spannungserfassungsteil (34, 44, 52, 60), der konfiguriert und eingerichtet ist, aus dem darin fließenden Strom einen Wert der Spannung zu erfassen, die vom Stromerzeugungsteil zugeführt wird;
einen Erfassungsergebnis-Verwendungsteil (37, 54, 62), der konfiguriert und eingerichtet ist, ein Erfassungsergebnis des Spannungserfassungsteils zu verwenden;
einen elektrischen Stromversorgungsteil (31), der konfiguriert und eingerichtet ist, dem Spannungserfassungsteil Strom zuzuführen; und
einen Schaltteil (35, 45, 53, 61, 135, 235), der konfiguriert und eingerichtet ist, den Stromfluss so zu schalten, dass Strom in den Spannungserfassungsteil fließt, wenn das Erfassungsergebnis vom Erfassungsergebnis-Verwendungsteil benötigt wird, und kein Strom in den Spannungserfassungsteil fließt, wenn das Erfassungsergebnis vom Erfassungsergebnis-Verwendungsteil nicht benötigt wird, wobei
der Schaltteil (35, 45, 53, 61, 135, 235) konfiguriert ist, den Stromfluss zum Spannungserfassungsteil (34) zu unterbrechen, wenn eine vorgegebene Zeit verstrichen ist, seitdem der Erfassungsergebnis-Verwendungsteil (37, 54, 62) die Verwendung des Erfassungsergebnisses gestoppt hat.

3. Vorrichtung zur Reduzierung des Stromverbrauchs (30, 130, 230, 300, 400) nach Anspruch 2, wobei der Schaltteil konfiguriert ist, den Strom in den Spannungserfassungsteil fließen zu lassen, wenn der Erfassungsergebnis-Verwendungsteil, der die Verwendung des Erfassungsergebnisses gestoppt hat, die Verwendung des Erfassungsergebnisses beginnt.

4. Vorrichtung (30, 130, 230) zur Reduzierung des Stromverbrauchs nach Anspruch 1, wobei
das Antriebsglied ein Motor ist, der eine Antriebsquelle von mindestens einer von mehreren Vorrichtungen ist, die in einer Klimaanlage (10) enthalten sind;
der Ansteuersignalerzeugungsteil
einen Bestimmungsteil (39) aufweist, der konfiguriert und eingerichtet ist, eine Steuerung zum Bestimmen eines Ansteuersignals unter Verwendung des Erfassungsergebnisses des Spannungserfassungsteils durchzuführen, und
einen Ausgabeteil (38), der konfiguriert und eingerichtet ist, das durch den Bestimmungsteil bestimmte Ansteuersignal zu erzeugen und das Ansteuersignal an das Antriebsglied auszugeben; und
der Schaltteil einer Schaltsteuerung von einer zentralen Steuereinheit (43) unterliegt, die konfiguriert und eingerichtet ist, getrennt von dem Bestimmungsteil des Ansteuersignalerzeugungsteils eine Gesamtsteuerung der mehreren Vorrichtungen durchzuführen, die in der Klimaanlage enthalten sind.

5. Vorrichtung zur Reduzierung des Stromverbrauchs (230) nach Anspruch 4, wobei der Spannungserfassungsteil parallel zum Stromerzeugungsteil geschaltet ist; und
der Schaltteil aufweist:
einen Schalter (235a), der in Reihe mit dem Spannungserfassungsteil geschaltet ist, und
einen Ansteuerstromversorgungsteil (235b), der konfiguriert und eingerichtet ist, Schalteransteuerstrom an den Schalter zu liefern, wobei der Ansteuerstromversorgungsteil auch an den Bestimmungsteil und/oder den Ausgabeteil Funktionsteil-Ansteuerstrom zum Ansteuern des Bestimmungsteils und/oder des Ausgabeteils liefert, und der Ansteuerstromversorgungsteil durch Zuführen oder Unterbrechen der Zufuhr des Funktionsteil-Ansteuerstroms konfiguriert ist, zusätzlich zum Schalten des Stromflusses zum Spannungserfassungsteil den Stromfluss zum Bestimmungsteil und/oder den Ausgabeteil zu schalten.

6. Vorrichtung (30, 130, 230) zur Reduzierung des Stromverbrauchs entweder nach Anspruch 4 oder 5, wobei der Schaltteil konfiguriert ist, den Stromfluss zum Spannungserfassungsteil zu unterbrechen, wenn eine vorgegebene Zeit verstrichen ist, seitdem die Klimaanlage den Betrieb eingestellt hat.

7. Vorrichtung (30, 130, 230) zur Reduzierung des Stromverbrauchs nach einem der Ansprüche 1, 4 bis 6, wobei das Antriebsglied ein Innenventilatormotor ist, der eine Antriebsquelle für einen Innenventilator (22) ist, der in der Klimaanlage enthalten ist.

8. Vorrichtung zur Reduzierung des Stromverbrauchs (30, 130, 230, 300, 400) nach einem der Ansprüche 1 bis 4, 6 und 7, wobei der Spannungserfassungsteil parallel zum Stromerzeugungsteil geschaltet ist, und der Schaltteil einen Schalter (35a, 45a, 53a, 61a) aufweist, der in Reihe mit dem Spannungserfassungsteil geschaltet ist.

9. Vorrichtung zur Reduzierung des Stromverbrauchs (30, 230) nach Anspruch 8, wobei der Schaltteil ferner einem Ansteuerstromversorgungsteil (35b, 45b, 53b, 61b) aufweist, der konfiguriert und eingerichtet ist, Schalteransteuerstrom an den Schalter zu liefern, und konfiguriert ist, durch Zuführen oder Unterbrechen des Schalteransteuerstroms zum Schalter den Stromfluss zum Spannungserfassungsteil zu schalten.

## Revendications

1. Dispositif de réduction de consommation d'énergie (30, 130, 230), comprenant :
une unité de génération d'énergie (31) ;
une unité de détection de tension (34) prévue et disposée pour détecter à partir du courant qui y circule une valeur de tension appliquée par l'unité de génération d'énergie ;
une unité de génération de signal de commande (37) prévue et disposée pour générer un signal de commande (SU, SV, SW) pour l'entraînement d'un actionneur (M22) sur la base d'un résultat de détection de l'unité de détection de tension ;
une unité d'alimentation en courant électrique (31) prévue et disposée pour alimenter en courant l'unité de détection de tension ; et
une unité de commutation (35, 135, 235) prévue et disposée pour commuter le flux de courant de sorte que le courant circule dans l'unité de détection de tension dans un mode d'entraînement où un entraînement est commandé par l'actionneur, alors que le courant ne circule pas dans l'unité de détection de tension dans un mode de suspension d'entraînement où l'entraînement est arrêté par l'actionneur,
où
l'unité de commutation (35, 135, 235) est prévue pour permettre la circulation du courant dans l'unité de détection de tension quand l'actionneur ayant arrêté l'entraînement reprend l'entraînement, et est prévue pour interrompre la circulation du courant vers l'unité de détection de tension après écoulement d'une durée définie depuis l'arrêt de l'entraînement par l'actionneur.

2. Dispositif de réduction de consommation d'énergie (30, 130, 230, 300, 400), comprenant :
une unité de génération d'énergie (31) ;
une unité de détection de tension (34, 44, 52, 60) prévue et disposée pour détecter à partir du courant qui y circule une valeur de tension appliquée par l'unité de génération d'énergie ;
une unité d'exploitation de résultat de détection (37, 54, 62) prévue et disposée pour exploiter un résultat de détection de l'unité de détection de tension ;
une unité d'alimentation en courant électrique (31) prévue et disposée pour alimenter en courant l'unité de détection de tension ; et
une unité de commutation (35, 45, 53, 61, 135, 235) prévue et disposée pour commuter le flux de courant de sorte que le courant circule dans l'unité de détection de tension quand le résultat de détection est exigé pour l'unité d'exploitation de résultat de détection, et que le courant ne circule pas dans l'unité de détection de tension quand le résultat de détection n'est pas exigé pour l'unité d'exploitation de résultat de détection,
où
l'unité de commutation (35, 45, 53, 61, 135, 235) est prévue pour interrompre la circulation du courant vers l'unité de détection de tension (34) après écoulement d'une durée définie depuis l'arrêt d'exploitation du résultat de détection par l'unité d'exploitation de résultat de détection (37, 54, 62).

3. Dispositif de réduction de consommation d'énergie (30, 130, 230, 300, 400) selon la revendication 2, où l'unité de commutation est prévue pour permettre la circulation du courant dans l'unité de détection de tension quand l'unité d'exploitation de résultat de détection, ayant été arrêtée à cause du résultat de détection, reprend à cause du résultat de détection.

4. Dispositif de réduction de consommation d'énergie (30, 130, 230) selon la revendication 1, où
l'actionneur est un moteur qui est une source d'entraînement d'au moins un dispositif d'une pluralité de dispositifs compris dans un climatiseur (10) ;
l'unité de génération de signal de commande comprend une unité de détermination (39) prévue et disposée pour exécuter une commande de détermination d'un signal de commande au moyen du résultat de détection de l'unité de détection de tension, et
une unité de sortie (38) prévue et disposée pour générer le signal de commande tel que déterminé par l'unité de détermination et transmettre le signal de commande à l'actionneur ; et où
l'unité de commutation est soumise à une commande de commutation d'une unité de commande centrale (43) prévue et disposée pour effectuer une commande d'ensemble de la pluralité de dispositifs compris dans le climatiseur, séparément de l'unité de détermination de l'unité de génération de signal de commande.

5. Dispositif de réduction de consommation d'énergie (230) selon la revendication 4, où
l'unité de détection de tension est connectée en parallèle à l'unité de génération d'énergie ; et où
l'unité de commutation comprend
un commutateur (235a) connecté en série à l'unité de détection de tension, et
une unité d'alimentation en puissance de commande (235b) prévue et disposée pour alimenter le commutateur en puissance de commande de commutateur, ladite unité d'alimentation en puissance de commande alimentant également l'unité de détermination et/ou l'unité de sortie en puissance de commande d'unité fonctionnelle pour la commande de l'unité de détermination et/ou de l'unité de sortie, et ladite unité d'alimentation en puissance de commande étant prévue pour commuter le flux de courant vers l'unité de détermination et/ou vers l'unité de sortie par alimentation ou coupure d'alimentation de puissance de commande d'unité fonctionnelle, en plus de commuter le flux de courant vers l'unité de détection de tension.

6. Dispositif de réduction de consommation d'énergie (30, 130, 230) selon la revendication 4 ou la revendication 5, où l'unité de commutation est prévue pour couper la circulation de courant vers l'unité de détection de tension après écoulement d'une durée définie depuis l'arrêt de fonctionnement du climatiseur.

7. Dispositif de réduction de consommation d'énergie (30, 130, 230) selon l'une des revendications 1, et 4 à 6, où l'actionneur est un moteur de ventilateur intérieur qui est une source d'entraînement pour un ventilateur intérieur (22) compris dans le climatiseur.

8. Dispositif de réduction de consommation d'énergie (30, 130, 230, 300, 400) selon l'une des revendications 1 à 4, et 6 et 7, où l'unité de détection de tension est connectée en parallèle à l'unité de génération d'énergie, et où l'unité de commutation présente un commutateur (35a, 45a, 53a, 61a) connecté en série à l'unité de détection de tension.

9. Dispositif de réduction de consommation d'énergie (30, 230) selon la revendication 8, où l'unité de commutation comprend en outre une unité d'alimentation en puissance de commande (35b, 45b, 53b, 61b) prévue et disposée pour alimenter le commutateur en puissance de commande de commutateur, et est prévue pour commuter le flux de courant vers l'unité de détection de tension par alimentation ou coupure d'alimentation du commutateur en puissance de commande de commutateur.
